# FASCICULE DE BREVET EUROPEEN

(11) **EP 1 672 270 B1**
(45) Date de publication et mention de la délivrance du brevet: **08.10.2008**
(21) Numéro de dépôt: 05292705.0
(22) Date de dépôt: 15.12.2005
(51) Int. Cl.: F17C 9/04, F17C 9/02

(54) **Système de compression-évaporation pour gaz liquéfié**
Anlage zum Verdichten und Verdampfen von Flüssiggasen
System for compressing and evaporating liquefied gases

(30) Priorité: 17.12.2004 FR 0413486
(43) Date de publication de la demande: 21.06.2006
(73) Titulaire: SNECMA, 75015 Paris (FR)
(72) Inventeur: Valentian, Dominique, 78710 Rosny sur Seine (FR); Feger, Damien, 27200 Vernon (FR); Marchal, Noël, 27200 Vernon (FR); Danguy, François, 27510 Tourny (FR); Lagnel, Olivier, 76300 Sotteville les Rouen (FR)
(74) Mandataire: Thévenet, Jean-Bruno

(56) Documents cités:
- EP-A- 0 470 532
- EP-A- 0 818 527
- GB-A- 1 204 119
- RIBESSE J ED - ASSOCIATION DES INGENIEURS ELECTRICIENS SORTIS DE L'INSTITUT MONTEFIORE: "Recuperation cycles of the cold energy contained in liquefied natural gas" JOURNEES INTERNATIONALES D'ETUDE DES CENTRALES ELECTRIQUES MODERNES. LIEGE, 26 - 30 OCTOBRE 1981, LIEGE, A.I.M, BE, vol. VOL. 2 SESSION 8, 26 octobre 1981 (1981-10-26), pages 3801-3808, XP002079414

## Description

### Domaine de l'invention

La présente invention concerne un système de compression-évaporation pour gaz liquéfié contenu dans un réservoir, comprenant des moyens de prélèvement et de pompage pour extraire et refouler le gaz liquéfié sous basse pression hors du réservoir, des moyens de pompage à haute pression, des moyens d'évaporation par échange thermique avec un fluide liquide et des moyens de conditionnement et de transfert vers un gazoduc.

L'invention se rapporte au domaine général des procédés de regazéification des gaz liquéfiés et en particulier au cas du gaz naturel liquéfié (GNL).

Dans la pratique, une partie du gaz naturel extrait est liquéfiée pour permettre son acheminement sous cette forme dans des navires méthaniers entre les zones de production et les zones de consommation de ce gaz. Cette logistique gazière comprend donc un terminal de liquéfaction et de stockage où viennent s'alimenter les navires méthaniers qui amènent ensuite le gaz liquéfié vers un terminal de stockage, de mise sous pression et de vaporisation qui alimente le réseau de distribution terrestre par gazoduc de la zone de consommation. Ce dernier terminal est appelé terminal méthanier de regazéification.

### Etat de la technique antérieure

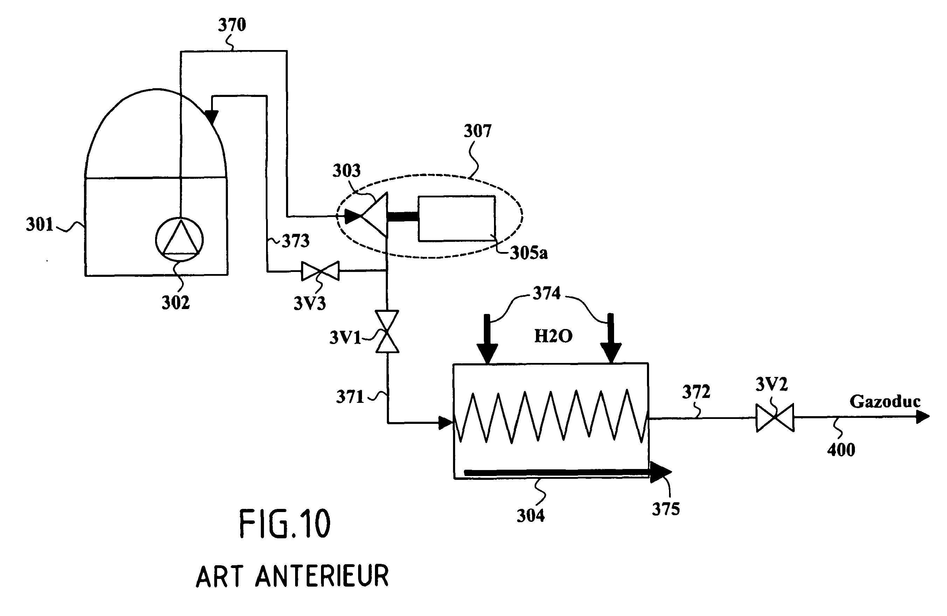

Pour assurer la mise sous pression et le réchauffement à la température ambiante du GNL initialement en équilibre dans les cuves de stockage du terminal ou dans celles du navire méthanier, avec sa vapeur sous une pression légèrement supérieure à la pression atmosphérique, l'état de la technique est, jusqu'à présent, comme illustré sur la Figure 10, d'utiliser tout d'abord une motopompe basse pression 302 immergée dans le réservoir de stockage 301 qui alimente une motopompe haute pression 303 immergée dans une capacité tampon 307. A la sortie de la motopompe haute pression 303, le liquide est envoyé vers un échangeur-évaporateur 304, soit alimenté par de l'eau à température ambiante et disponible en abondance (eau de mer, d'estuaire,...) lorsque les conditions climatiques le permettent, soit alimenté par de l'eau réchauffée (pouvant être obtenue par une combustion spécifique ou par récupération des pertes d'une machine thermique voisine), et qui porte le GNL haute pression à la température ambiante avant de l'injecter dans le gazoduc 400. Les moteurs 305a utilisés pour entraîner les motopompes haute pression 303 sont en général des moteurs asynchrones à cage d'écureuil tournant à vitesse fixe et limitée : au maximum 3000 tr/min pour du courant triphasé à 50 Hz et 3600 tr/min pour du courant à 60 Hz. Cette technologie conduit à des motopompes 303 à grand nombre d'étages et de grandes dimensions. En particulier, une telle technologie représentera un handicap certain pour toutes les applications off-shore. Par ailleurs, les motopompes haute pression 303 requièrent une grande quantité d'énergie électrique qui représente le poste financier le plus important dans le coût d'exploitation du terminal.

La Figure 10 présente un schéma de principe du procédé de regazéification sur un terminal méthanier selon l'art antérieur. Les fonctions pompage haute pression, ainsi que réchauffage/vaporisation sont regroupées géographiquement sur le terminal, et le nombre de lignes de transfert 370, 371, 372 est limité à une ou deux. Le schéma ne représente qu'un équipement par fonction et, de plus, les équipements de vannage, régulation et contrôle ne figurent pas non plus pour faciliter la compréhension. Seuls trois types de vannes sont représentés sur le schéma. Une vanne 3V1 est implantée au refoulement d'une pompe HP 303 et une vanne 3V2 est implantée à l'entrée du gazoduc 400 jouant le rôle de déverseur. Les vannes 3V1 et 3V2 participent à l'ajustement du débit et de la pression d'émission vers le gazoduc 400 sur les lignes 371, 372. En pratique, la vanne 3V2 est en série avec une vanne d'arrêt ou un clapet anti-retour. Enfin, une vanne 3V3 permet de recirculer du GNL à basse pression vers le réservoir 301 ou un circuit spécifique par une ligne 373 pour réaliser la mise en froid avant de démarrer les motopompes HP 303. Le GNL est extrait du réservoir 301 par une motopompe basse pression 302 vers l'entrée des motopompes haute pression 303, traverse un échangeur-évaporateur 304 avant d'être injecté sous forme gazeuse sous pression dans le réseau gazoduc 400. De l'eau est introduite dans l'échangeur-évaporateur 304 par un circuit d'alimentation 374 et est évacuée par un circuit d'évacuation 375.

La présence d'une source froide à très basse température qui doit être réchauffée dans le processus industriel représente une opportunité intéressante de valorisation et de nombreuses utilisations existent ou ont été proposées dans des brevets ou publications antérieurs. A titre d'exemple, on peut citer le couplage du terminal à des installations frigorifiques ou de liquéfaction de gaz industriels. Parmi toutes les utilisations possibles des frigories du GNL, on se limite ici à des solutions d'adaptation du procédé de compression/réchauffage/évaporation dans le but de récupérer de l'énergie directement utilisable par le terminal.

Lorsque l'on considère l'aspect thermodynamique du procédé, qui consiste en premier lieu à augmenter la pression du GNL par les pompes et en second lieu à augmenter sa température et son enthalpie par les échangeurs-évaporateurs, on peut identifier deux schémas possibles pour récupérer de l'énergie :
Une première solution consiste, lors du pompage, à sur-pressuriser le gaz naturel liquide par rapport au besoin, et à réaliser ensuite une détente jusqu'à la pression du gazoduc dans une turbine chargée de transformer cette énergie fluide en énergie mécanique. Le bilan dans ce cas est positif car la récupération d'enthalpie dans la turbine par la détente gazeuse est supérieure au complément à fournir pour le pompage.
Une deuxième solution consiste à utiliser le gaz naturel liquide comme la source froide d'un cycle thermodynamique utilisant une source chaude à la température ambiante ou à une température supérieure.

Ces différents principes de récupération d'énergie ont fait l'objet par le passé de nombreux brevets ou communications, comme par exemple les documents de brevet US 2 937 504, US 3 068 659, FR 2 133 683, CH 569 865, FR 2 300 216, FR 2 317 590, US 4 444 015, EP 0 470 532 ainsi que l'article XP- 002 079414 (1981) de J. Ribesse (Distrigaz-Belgique) intitulé "Cycles de récupération des frigories contenues dans le gaz naturel liquéfié".

Ces documents s'attachent essentiellement à décrire le principe des cycles de récupération d'énergie et ne donnent en général pas d'exemple de ce que pourrait être une application concrète.

Le brevet US 5 678 411 décrit une application plus précise avec une turbopompe utilisée dans un dispositif mettant en oeuvre l'évaporation du gaz naturel dans un échangeur alimenté par de l'eau de mer, la turbine apportant la puissance motrice à la pompe par la détente partielle du gaz vaporisé par l'échangeur. Cependant, l'enthalpie du gaz est juste suffisante pour autoriser une pression de sortie de 3 à 6 MPa. Cette pression s'avère être insuffisante pour de nombreux gazoducs, et en particulier pour le réseau européen dont la pression d'alimentation est voisine de 8 MPa, et peut atteindre 10 MPa pour certaines applications. Cela provient des caractéristiques du gaz naturel, composé essentiellement de méthane dont le point critique est situé à 4,596 MPa et 190,5 K. La différence d'enthalpie dans une détente adiabatique entre 15 MPa, 273 K et 10 MPa (donc proche du point critique) est inférieure à la puissance de compression du liquide entre 0,5 MPa et 15 MPa.

Pour éviter ce problème, le brevet US 5 649 425 fait appel au chauffage du gaz naturel en amont de la turbine au-delà de la température ambiante par un brûleur air-gaz naturel. Ce réchauffage permet de récupérer plus d'enthalpie dans la turbine et donc de compenser l'énergie de pompage, mais en contrepartie le gaz brûlé représente une perte économique au même titre que la puissance électrique utilisée dans une motopompe haute pression. Ce brevet US 5 649 425 propose une deuxième solution : la pompe est une pompe à deux étages (ou deux groupes d'étages) le débit total de GNL passant dans le premier étage de pompe et une fraction du débit principal étant alors portée à une pression supérieure, puis réchauffée et vaporisée dans l'échangeur pour actionner la turbine. Le débit de GNL sortant du premier étage est utilisé pour des fonctions annexes, comme d'alimentation d'une centrale thermique par exemple.

Cette solution n'est utilisable que dans la mesure où le terminal méthanier est couplé à une centrale thermique ou s'il peut délivrer du gaz naturel à deux niveaux de pression.

Les motopompes haute pression présentent également les désavantages suivants :
a) elles sont entraînées par un moteur asynchrone à cage non régulé tournant à relativement basse vitesse (3000 ou 3600 tr/min) et nécessitent un nombre d'étages important (typiquement 10 à 20) pour réaliser la surpression requise ;
b) cet aménagement de pompe à grand nombre d'étages centrifuges conduit à des machines de grandes dimensions (typiquement 6 mètres de hauteur) onéreuses, lourdes et encombrantes, et de plus peu tolérantes à une augmentation de la pression dans les gazoducs, si le besoin s'en faisait sentir ;
c) elles sont limitées en débit par la limitation en puissance de ces mêmes moteurs (1 à 2 mégawatts) et doivent être multipliées pour assurer le débit d'émission du terminal ;
d) elles ne sont pas régulées au niveau du moteur et ne peuvent être asservies en débit que par le biais de vannes de laminage implantées sur le refoulement, solution fortement pénalisante en terme de consommation électrique.

On connaît encore par le document GB 1204119A des systèmes de turbomachine utilisant des cycles thermodynamiques dans lesquels au moins deux fluides de travail utilisés en circuit fermé produisent de l'énergie électrique.

### Objet et description succincte de l'invention

L'invention vise à remédier aux inconvénients précités et à permettre de réduire, voire annuler, la consommation électrique du terminal méthanier de regazéification.

L'invention vise ainsi à apporter des solutions globales et économiquement rentables aux terminaux méthaniers de regazéification en leur permettant de réduire ou d'annuler leur consommation électrique, voire de devenir producteurs d'électricité tout en remédiant aux inconvénients des systèmes existants précités. L'invention est en outre bien adaptée aux configurations particulières où le terminal est couplé à une centrale électrique mettant en oeuvre des machines thermiques, dans laquelle les pertes thermiques de la centrale sont récupérées et transférées aux échangeurs-évaporateurs du terminal. L'invention est également applicable à tout procédé industriel mettant en oeuvre la compression et le réchauffage à température ambiante d'un gaz liquéfié.

Ces buts sont atteints grâce à un système de compression-évaporation pour gaz liquéfié contenu dans un réservoir, comprenant des moyens de prélèvement et de pompage pour extraire et refouler le gaz liquéfié sous basse pression hors du réservoir, des moyens de pompage à haute pression, des moyens d'évaporation par échange thermique avec un fluide liquide et des moyens de conditionnement et de transfert vers un gazoduc, caractérisé en ce qu'il comprend au moins une turbomachine constituée par une moto-turbopompe comprenant un ensemble tournant à grande rigidité en flexion sur une même ligne d'arbre, avec au moins une pompe haute pression comprenant un étage d'aspiration axial et au moins une roue centrifuge, une turbine et une machine électrique centrale pouvant être utilisée en mode moteur ou génératrice et située entre la pompe haute pression et la turbine, cette moto-turbopompe étant agencée de manière compacte à l'intérieur d'un carter rigide ne présentant que des étanchéités statiques avec le milieu environnant, l'ensemble tournant de la moto-turbopompe étant adapté pour présenter une haute vitesse de rotation supérieure à 12 000 tr/min tout en restant en dehors des plages d'excitation des vitesses critiques de rotation, toutes les parties internes de la moto-turbopompe étant baignées par un même fluide cryogénique que le gaz liquéfié contenu dans le réservoir, la séparation de cavités internes de la moto-turbopompe se trouvant dans des conditions thermodynamiques différentes étant assurée par des joints d'étanchéité dynamiques sans contact, et des circuits électroniques de puissance raccordés à un réseau électrique assurant le pilotage de la machine électrique centrale en mode moteur ou génératrice.

Avantageusement, la vitesse de rotation de l'ensemble tournant de la moto-turbopompe est de plusieurs dizaines de milliers de tours/minute et de préférence comprise entre 20 000 et 40 000 tr/min.

Divers modes de réalisation sont possibles et en particulier, conformément à l'invention, une moto-turbopompe peut être implantée soit en direct sur la ligne d'émission du terminal, soit en dérivation entre la sortie d'une motopompe haute pression et un échangeur de regazéification.

Selon un mode particulier avantageux, le système comprend un premier échangeur-évaporateur intercalé entre la pompe haute pression et la turbine pour assurer la compression/évaporation du gaz liquéfié utilisé comme fluide de travail dans la moto-turbopompe.

Les moyens d'évaporation peuvent comprendre ledit premier échangeur-évaporateur intercalé entre la pompe haute pression et la turbine et un second échangeur-évaporateur disposé entre la turbine et le gazoduc à alimenter.

Selon un mode particulier de réalisation, les moyens de pompage à haute pression comprennent exclusivement la pompe haute pression de la moto-turbopompe qui est montée en série entre le réservoir et le gazoduc.

Le système peut comprendre une capacité tampon disposée en entrée de la pompe haute pression de la moto-turbopompe.

Selon un mode particulier de réalisation, le système comprend en outre un condenseur avec un premier circuit interposé entre la sortie de la pompe haute pression de la moto-turbopompe et le premier échangeur-évaporateur et un second circuit interposé entre la sortie de la turbine de la moto-turbopompe et la capacité tampon, le second circuit étant en échange de chaleur avec le premier circuit pour reliquéfier le fluide gazeux sortant de ladite turbine.

Selon un autre mode particulier de réalisation, les moyens de pompage à haute pression comprennent une motopompe dont l'entrée est reliée auxdits moyens de prélèvement et de pompage, et dont la sortie est reliée à un premier circuit d'un condenseur, la sortie de ce premier circuit étant reliée à l'entrée d'un échangeur-évaporateur dont la sortie est reliée audit gazoduc, ladite capacité tampon est montée en dérivation à la sortie de ladite motopompe et la sortie de la turbine de la moto-turbopompe est reliée à l'entrée d'un second circuit du condenseur, la sortie de ce second circuit étant reliée à ladite capacité tampon, le second circuit étant en échange de chaleur avec le premier circuit pour reliquéfier le fluide gazeux sortant de ladite turbine.

Avantageusement, les moyens d'évaporation par échange thermique avec un fluide liquide comprennent des moyens d'introduction et d'évacuation d'un fluide liquide constitué par de l'eau dont la température est au moins égale à la température ambiante.

De même, le premier échangeur-évaporateur intercalé entre la pompe haute pression et la turbine comprend des moyens d'introduction et d'évacuation d'un fluide liquide constitué par de l'eau dont la température est au moins égale à la température ambiante.

Selon un mode de réalisation possible, la moto-turbopompe comprend des paliers fluides hydrostatiques alimentés à partir du même fluide à l'état liquide et comprimé que le fluide disponible en sortie de la pompe haute pression de la moto-turbopompe.

La moto-turbopompe peut également comprendre un dispositif hydraulique d'équilibrage actif des efforts axiaux alimenté à partir du même fluide à l'état liquide et comprimé que le fluide disponible en sortie de la pompe haute pression de la moto-turbopompe.

Selon une variante de réalisation, la moto-turbopompe comprend une butée fluide axiale alimentée à partir du même fluide à l'état liquide et comprimé que le fluide disponible en sortie de la pompe haute pression de la moto-turbopompe.

Selon un autre mode de réalisation possible, la moto-turbopompe comprend des paliers magnétiques actifs et peut également comprendre une butée axiale magnétique.

Selon encore un autre mode de réalisation possible, la moto-turbopompe comprend des roulements haute vitesse à billes céramiques.

Avantageusement, la turbine de la moto-turbopompe comprend un rotor en alliage de titane à haute résistance de type TA6 V ELI ou TA5 E ELI ou en alliage léger du type aluminium-lithium.

De même, la pompe haute pression de la moto-turbopompe comprend un ou plusieurs rouets en alliage de titane à haute résistance du type TA6 V ELI ou TA5 E ELI ou en alliage léger de type aluminium-lithium.

Selon un mode particulier de réalisation, la machine électrique centrale de la moto-turbopompe comprend un rotor à aimants permanents, les circuits électroniques de puissance assurant l'alimentation à fréquence synchrone de la vitesse de rotation et tension variable en mode moteur et convertissant la tension variable créée en tension fixe redressée en mode générateur.

Selon un autre mode particulier de réalisation, la machine électrique centrale de la moto-turbopompe comprend un rotor monobloc à bobine d'excitation alimentée par un transformateur tournant et un pont de diodes de redressement pour réguler l'excitation de la machine électrique et fournir une tension constante en mode générateur et un couple contrôlé en mode moteur.

Selon encore un autre mode particulier de réalisation la machine électrique centrale de la moto-turbopompe comprend un rotor à cage d'écureuil, les circuits électroniques de puissance assurant l'alimentation à fréquence et tension variable en mode moteur et convertissant la tension variable créée en tension fixe redressée en mode générateur.

### Brève description des dessins

D'autres caractéristiques et avantages de l'invention ressortiront de la description suivante de modes particuliers de réalisation de l'invention, donnés à titre d'exemples, en référence aux dessins annexés, sur lesquels :
- les Figures 1 à 4 sont des vues schématiques d'ensemble d'un système de compression-évaporation pour gaz liquéfié respectivement selon des premier, deuxième, troisième et quatrième modes de réalisation de l'invention,
- la Figure 5 est une vue schématique en coupe axiale d'un exemple de moto-turbopompe pouvant être utilisée dans le cadre d'un système de compression-évaporation d'un gaz liquéfié, conformément à l'invention,
- la Figure 6 est une vue schématique en coupe axiale d'un exemple de machine électrique centrale pouvant être utilisée avec une moto-turbopompe conformément à l'invention,
- la Figure 7 représente une vue schématique de la circulation de fluides dans une moto-turbopompe utilisée dans le cadre du mode de réalisation de la Figure 1,
- la Figure 8 représente une vue schématique de la circulation de fluides dans une moto-turbopompe utilisée dans le cadre des modes de réalisation des Figures 2, 3 et 4,
- la Figure 9 est un schéma-bloc montrant les principaux modules constituant les circuits électroniques de puissance de commande de la machine électrique centrale d'une moto-turbopompe utilisée dans le cadre de la présente invention, et
- la Figure 10 est une vue schématique d'un exemple de système de compression-évaporation pour gaz liquéfié selon l'art antérieur.

### Description détaillée de modes particuliers de réalisation

L'invention, qui s'applique en particulier à un terminal méthanier de regazéification, vise à réduire, voire annuler, la consommation électrique d'un tel terminal et met en oeuvre une turbomachine spécifique dénommée moto-turbopompe (ou MTP) qui peut s'appliquer à différents cycles de récupération d'énergie.

L'invention concerne un système de compression-évaporation pour gaz liquéfié, qui comprend en outre des moyens conventionnels mis en oeuvre pour assurer la compression/échauffement/évaporation du gaz liquéfié, à savoir des moyens de prélèvement et de pompage centrifuge pour refouler le gaz liquide sous basse pression hors du réservoir, des moyens de pompage à haute pression et d'évaporation par échange thermique avec de l'eau à température ambiante ou réchauffée et des moyens de conditionnement et de transfert vers un gazoduc.

Le système de compression-évaporation selon l'invention comprend des moyens complémentaires qui comprennent au moins une turbomachine spécifique, associée à un ou plusieurs échangeurs thermiques et à des équipements fluides et de contrôle destinés à assurer la récupération d'énergie sous forme thermique ou électrique. La turbomachine additionnelle peut être implantée soit en direct sur la ligne d'émission du terminal issue du réservoir de gaz liquéfié et conduisant au gazoduc, soit en dérivation entre la sortie d'une motopompe haute pression et un échangeur de regazéification.

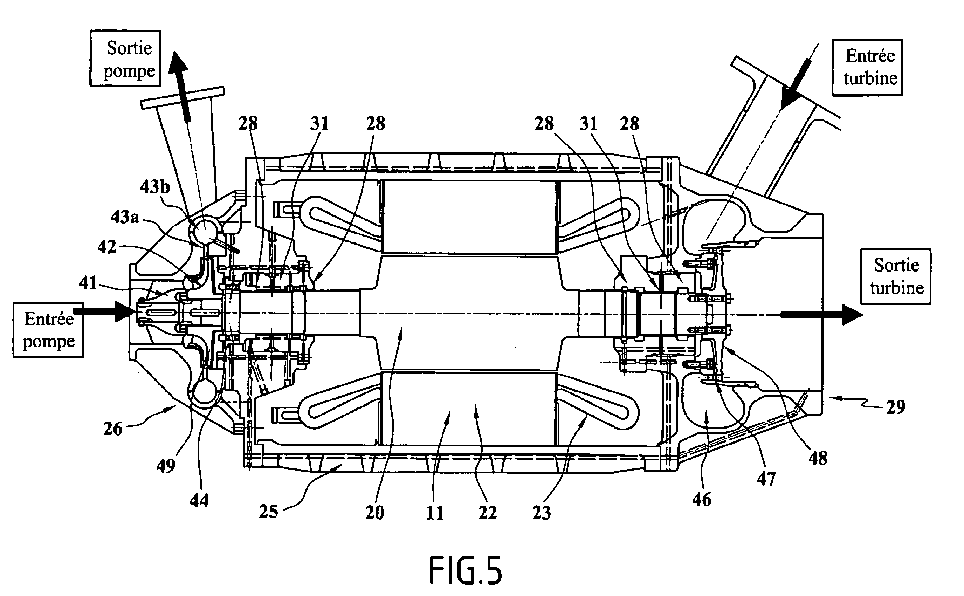

La turbomachine additionnelle ou moto-turbopompe intègre sur une même ligne d'arbres une pompe 26, une machine électrique 11 pouvant être utilisée en mode moteur ou en mode génératrice et qui peut être qualifiée indifféremment d'alternateur, et une turbine 29, la machine électrique 11 étant disposée de façon centrale entre la pompe 26 et la turbine 29 (Figure 5).

La moto-turbopompe est conçue pour pouvoir tourner à une vitesse très supérieure à la vitesse des motopompes haute pression conventionnelles. La vitesse de rotation d'une moto-turbopompe est ainsi supérieure à 12 000 tr/min et peut avantageusement aller jusqu'à quelques dizaines de milliers de tours par minute, typiquement entre 20 000 et 40 000 tr/min, cette vitesse devant simplement se trouver en dehors des plages d'excitation des vitesses critiques de la moto-turbopompe.

La moto-turbopompe avec sa machine électrique centrale 11 comprend un ensemble tournant à grande rigidité en flexion sur une même ligne d'arbre et est agencée de manière compacte à l'intérieur d'un carter rigide 25 ne présentant que des étanchéités statiques avec le milieu environnant (Figure 5).

Toutes les parties internes de la moto-turbopompe sont baignées par un fluide cryogénique commun, sous forme liquide ou gazeuse, qui est issu du réservoir de gaz liquéfié à évaporer ou est d'une même nature.

La partie pompe 26 comprend un étage d'aspiration axial 41 accolé à une première roue centrifuge 42. Une ou plusieurs roues centrifuges peuvent le cas échéant être ajoutées à la première roue centrifuge 42. Un diffuseur aubé 43a et une volute 43b ou un diffuseur aubé et un canal de retour assurent la récupération d'énergie cinétique du fluide en sortie de chaque roue centrifuge. L'alimentation des roues centrifuges successives est ainsi assurée par les canaux de retour. La pompe 26 assure la compression du gaz liquide introduit dans l'étage d'aspiration axial.

La turbine 29 comprend une tubulure 46 d'arrivée de gaz sous pression, un distributeur aubé 47 assurant la mise en vitesse du gaz et un rotor 48 assurant la transformation de l'énergie cinétique des gaz en énergie mécanique.

La turbine 29 peut être par exemple du type axiale à admission totale, selon une application monoétage ou bi-étage, supersonique, transsonique ou subsonique.

La turbine 29 peut également être du type centripète à un étage.

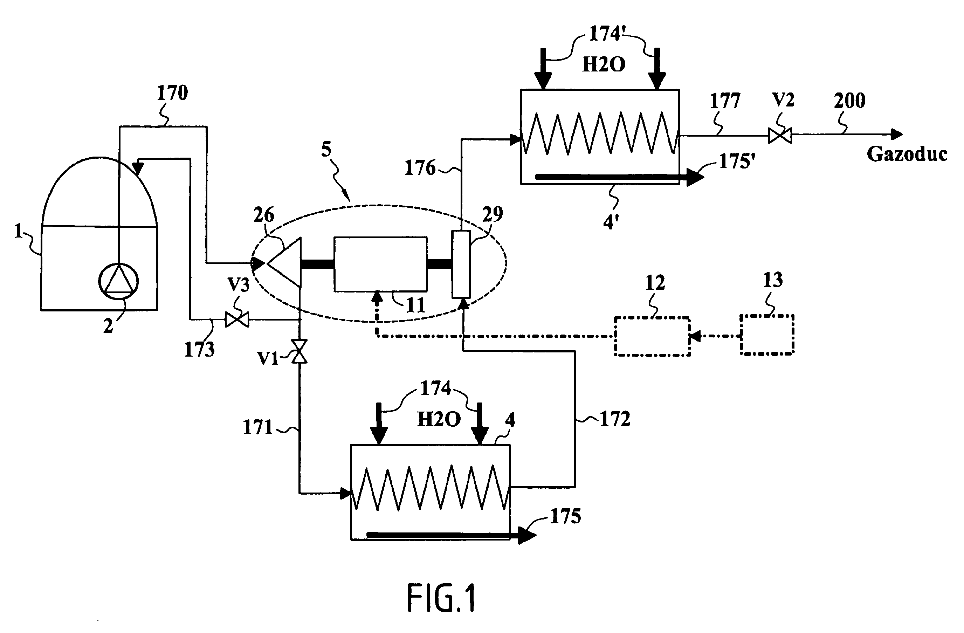

La machine électrique centrale 11, qui peut encore être dénommée alternateur, peut fonctionner en mode moteur pour apporter le complément d'énergie nécessaire au bon fonctionnement de la pompe 26. La machine électrique 11 peut encore fonctionner en mode génératrice pour restituer sous forme d'électricité de l'énergie excédentaire dans le bilan turbine-pompe. La machine électrique 11 est raccordée à des circuits électroniques de puissance 12 qui sont raccordés à un réseau électrique 13 pour assurer le pilotage de la machine électrique 11 en mode moteur ou génératrice (Figures 1 à 4 et 9).

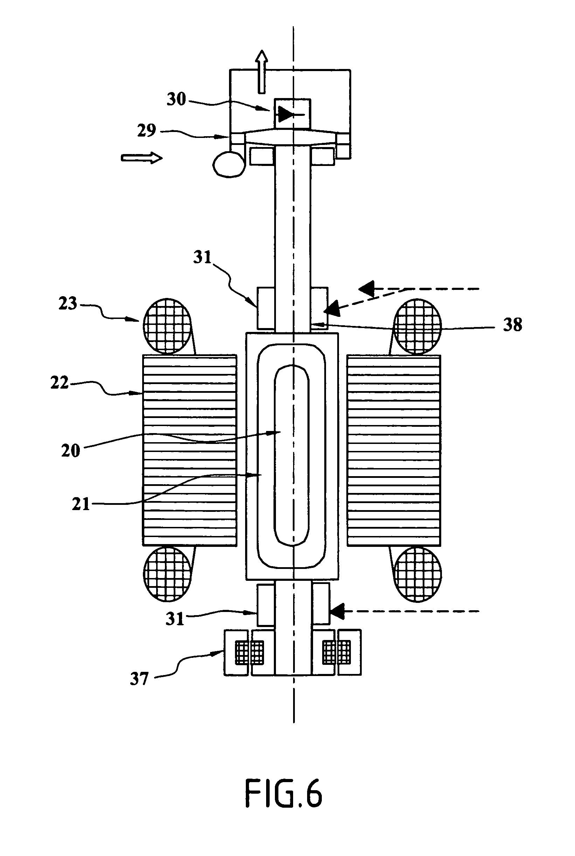

La machine électrique 11 comprend un circuit magnétique de stator 22 et des bobines de stator 23 (Figures 5 et 6).

La machine électrique 11 comporte un rotor 20 dont la vitesse périphérique est élevée, typiquement de l'ordre de 250m/s. Le rotor 20 doit ainsi être réalisé selon une technologie compatible avec une telle vitesse de rotation. Le rotor 20 peut par exemple être constitué par un rotor feuilleté à cage d'écureuil. Dans ce cas, les circuits électroniques 12 assurent l'alimentation à fréquence et tension variable en mode moteur et convertissent en tension fixe redressée la tension variable issue de la machine en mode générateur.

Le rotor 20 solidaire d'un arbre 38 peut avantageusement être réalisé, comme représenté sur la Figure 6, sous la forme d'un rotor monobloc en acier à haute résistance avec une bobine d'excitation 21 alimentée par l'intermédiaire d'un transformateur tournant 37 associé à des diodes de redressement 30, de manière à réguler l'excitation de la machine et de fournir une tension constante en mode générateur et un couple contrôlé en mode moteur.

Le rotor 20 peut encore être à aimants permanents pour assurer l'alimentation à fréquence synchrone de la vitesse de rotation et tension variable en mode moteur et convertir en mode générateur la tension variable issue de la machine en tension fixe redressée.

Le fait que la machine électrique 11 soit située entre la pompe 26 et la turbine 29 avec une intégration sur une même ligne d'arbre confère à l'ensemble tournant une raideur en flexion importante, ce qui permet à la moto-turbopompe de fonctionner en dessous de sa première vitesse critique de flexion jusqu'à une vitesse de rotation élevée de l'ordre de plusieurs dizaines de milliers de tours par minute.

Avantageusement, le rotor 48 de la turbine 29 et les rouets 41, 42 de la pompe 26 sont réalisés en alliage de titane à haute résistance, par exemple de type TA6 V ELI ou TA5 E ELI ou en alliage léger par exemple de type aluminium-lithium. Une telle utilisation d'alliages à forte valeur du rapport limite élastique/densité autorise la fabrication d'une moto-turbopompe monobloc et très compacte du fait que, même avec une pression de refoulement de 10 à 20 MPa, les éléments tournants conservent une bonne résistance mécanique et que le nombre d'étages peut être fortement réduit, côté pompe et côté turbine.

L'ensemble tournant de la moto-turbopompe peut être supporté par deux paliers fluides hydrostatiques 31 (Figure 5).

Lorsque la moto-turbopompe est équipée de paliers fluides 31, des joints dynamiques 28 peuvent être disposés entre la pompe 26, le palier fluide 31 situé à côté de la pompe 26, entre ce palier fluide 31 situé à côté de la pompe 26 et la machine électrique 11, entre la machine électrique 11 et le palier fluide 31 situé à côté de la turbine 29, ainsi qu'entre ce dernier palier fluide 31 situé à côté de la turbine 29 et la turbine 29.

Le carter 25 de la moto-turbopompe est compact, de grande rigidité et ne présente que des étanchéités statiques avec le milieu environnant. Ce carter 25 est conçu pour minimiser les fuites thermiques entre la turbine 28 et la pompe 26 tout en maintenant l'alignement des paliers.

Un palier à roulements 44 peut être prévu de façon optionnelle pour faire office de palier de secours en tant que butée tournante axiale agissant lors de l'apparition de transitoires de la moto-turbopompe, de manière à assurer la reprise des efforts notamment lorsque la vitesse de rotation est trop basse pour que les pressions disponibles dans la moto-turbopompe permettent d'équilibrer les efforts, ou en cas de panne.

Toutefois, il est à noter que toutes les parties internes de la moto-turbopompe sont baignées par le même fluide cryogénique, sous forme liquide ou gazeuse, les joints d'étanchéité dynamique sans contact 28 assurant la séparation des cavités internes se trouvant dans des conditions thermodynamiques différentes.

Les barrières d'étanchéité dynamique 28 peuvent être composées de joints labyrinthes ou à bague flottante simple, ou de couples de joints labyrinthes ou à bagues flottantes et à récupération de fuite pour assurer le confinement des fluides dans chacune des cavités internes de la moto-turbopompe.

Les paliers fluides 31 sont alimentés par du fluide liquide sous haute pression prélevé en aval de la dernière roue centrifuge de la pompe 26.

La géométrie de la ou de la dernière des roues centrifuges 42 de la pompe 26 ainsi que la partie statorique en vis-à-vis sont dessinées de façon à former une ou deux restrictions 49 au passage du fluide, ces restrictions étant de section variable selon la position relative entre le rotor et le stator de la pompe 26 et constituant un dispositif d'équilibrage axial qui permet de modifier le champ de pression local et d'annuler la résultante des efforts axiaux sur l'ensemble tournant.

L'architecture et les conduits internes de la moto-turbopompe sont définis de manière à optimiser les recirculations nécessaires pour alimenter les paliers fluides 31, ainsi que le dispositif d'équilibrage axial 49, tout en assurant un refroidissement de la machine électrique 11 et les évacuations fluides vers l'entrée pompe ou le circuit aval de la turbine 29.

Le dispositif d'équilibrage axial actif 49 peut être remplacé le cas échéant par une butée fluide alimentée à partir de la haute pression de la pompe 26.

L'alimentation des paliers fluides 31 et le cas échéant de la butée fluide, peut être réalisée à partir d'une source externe supplémentaire du même fluide à l'état liquide et comprimé que le fluide liquéfié issu d'un réservoir principal et destiné à alimenter un gazoduc. Dans le cas où le fluide principal est du GNL, la source externe supplémentaire peut être par exemple un terminal méthanier de regazéification qui dispose de gaz naturel liquide pressurisé. L'alimentation des paliers fluides 31 à partir de la source externe supplémentaire peut être effectuée soit en permanence, soit pendant les seules phases de fonctionnement transitoires de la moto-turbopompe.

La machine électrique 11 peut être refroidie par exemple par circulation de gaz prélevé à l'entrée de la turbine 29 et détendu à une pression légèrement supérieure à la pression du circuit d'évacuation, de manière à maintenir le fluide dans un état thermodynamique gazeux ou légèrement diphasique. Ce choix a pour but de minimiser les pertes par frottement visqueux dans l'entrefer.

Comme on l'a déjà indiqué, le dispositif hydraulique d'équilibrage 49 ainsi que les paliers fluides 31 sont directement alimentés par du gaz naturel liquide prélevé sur la partie haute pression de la pompe 26 par le biais de recirculations internes. Les paliers fluides 31 peuvent être également alimentés de façon permanente par des sources gazeuses ou liquides à haute pression disponibles sur le terminal ou simplement avant et pendant les régimes transitoires tant que la pression délivrée par la pompe 26 n'est pas suffisante.

L'architecture proposée pour la moto-turbopompe permet de conditionner tous ses volumes internes avec du gaz naturel sous forme liquide ou vapeur et de ne présenter que des étanchéités statiques vis-à-vis de l'environnement externe. La pompe 26, les paliers fluides 31 et éventuellement la machine électrique 11 sont dans un environnement liquide, les autres volumes internes étant en ambiance gazeuse. Le confinement de chaque cavité présentant une pression et une qualité de fluide différente des cavités adjacentes est assuré par des étanchéités dynamiques 28 réalisées par des joints de type labyrinthe ou à bagues flottantes, permettant de minimiser les fuites et assurant à la machine l'absence d'usure par contact frottant. Les joints dynamiques 28 sont montés selon le besoin seuls ou par paire, et dans ce deuxième cas, les fuites à basse pression sont collectées entre chaque paire de joints d'étanchéité, et évacuées lorsque c'est possible vers l'aval de la turbine 29, ou réincorporées à l'entrée de la pompe 26.

A titre de variante, la machine électrique 11 peut être refroidie par circulation de fluide en phase liquide. Dans ce cas, la machine électrique opérant dans un environnement thermique à moins de 150 K voit ses performances améliorées. Le stator de la machine électrique 11 est dans ce cas chemisé de manière à minimiser les pertes par friction du liquide dans l'entrefer.

Selon un autre mode de réalisation possible, les paliers fluides hydrostatiques 31 peuvent être remplacés par des paliers magnétiques actifs. De tels paliers sont totalement insensibles à l'usure et confèrent ainsi à la moto-turbopompe une durée de vie très importante.

Dans ce cas, le dispositif hydraulique 49 d'équilibrage des efforts axiaux s'exerçant sur l'ensemble tournant de la moto-turbopompe peut également être remplacé par une butée magnétique axiale active.

Pour une application à du GNL et dans le cas où la moto-turbopompe est équipée de paliers magnétiques, l'ensemble des paliers magnétiques actifs et de la machine électrique 11 est conditionné en gaz naturel à l'état liquide ou gazeux, et les étanchéités dynamiques 28 sont réduites à deux situées d'une part entre la pompe 26 et le palier situé à côté de la pompe 26 et d'autre part entre la turbine 29 et le palier situé à côté de la turbine 29.

Avec des paliers fluides ou des paliers magnétiques qui présentent des raideurs de paliers particulièrement basses, il est possible d'avoir une vitesse de rotation en fonctionnement normal stabilisé qui est par exemple située entre les deux premiers modes de paliers et la première vitesse critique de flexion de l'ensemble tournant.

Dans le moto-turbopompe selon l'invention, la pompe 26 est utilisée pour comprimer un fluide liquide à basse température, tel que du gaz naturel liquéfié, et la turbine 29 assure la fourniture d'énergie mécanique à la pompe 26 par détente du même fluide à l'état gazeux.

La machine électrique 11 apporte le complément d'énergie mécanique à la pompe 26 si la turbine 29 ne suffit pas ou au contraire évacue l'excès d'énergie de la turbine 29 sous forme de production d'énergie électrique.

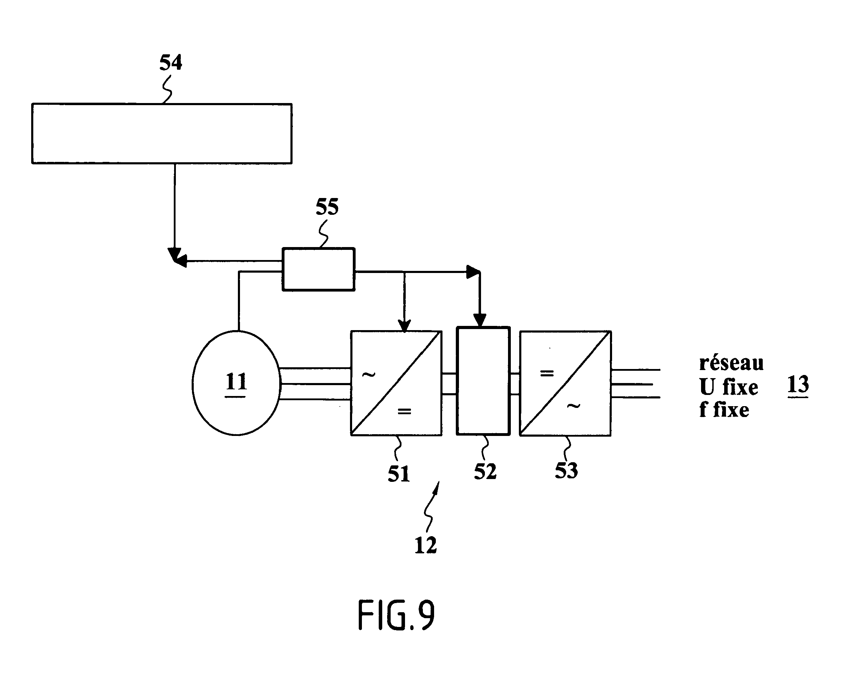

Comme représenté sur la Figure 9, la machine électrique 11 est pilotée en mode moteur ou générateur par des circuits électroniques de puissance 12 raccordés à un réseau électrique 13 de fréquence f et de tension nominale U déterminées.

Les circuits électroniques de puissance 12 peuvent comprendre un redresseur de courant 51, un convertisseur de tension 52 et un onduleur 53 interposés entre la machine électrique 11 et le réseau électrique d'alimentation 13.

L'ensemble des circuits 12 permet de gérer le transfert de courant dans les deux sens, de la moto-turbopompe vers le réseau 13 dans le mode génératrice et du réseau 13 vers la moto-turbopompe dans le mode moteur. Des circuits 55 d'asservissement du couple et de la vitesse de rotation de la machine électrique 11 sont reliés à cette dernière, au redresseur 51 et au convertisseur de tension 52. Les circuits électroniques de puissance 12 comprennent également des circuits 54 de commande de diverses vannes associées à la moto-turbopompe.

Le pilotage de la moto-turbopompe peut être assuré judicieusement en vitesse quel que soit le bilan énergétique entre la pompe 26 et la turbine 29 : lorsque ce bilan est en faveur de la turbine 29, les circuits électroniques retransmettent le courant excédentaire vers le réseau local 13 en adaptant ses caractéristiques de tension et fréquence, et inversement ils fournissent les bonnes caractéristiques de fréquence, tension au moteur 11 en cas de déficit de puissance entre le besoin de la pompe 26 et la performance de la turbine 29. Ainsi, le dispositif permet de réguler parfaitement les transitoires de démarrage ou d'arrêt de la moto-turbopompe et d'assurer le bon fonctionnement du système. Les circuits électroniques sont adaptés à la technologie particulière retenue pour la machine électrique 11.

Dans le cas où la machine électrique 11 est du type à excitation variable, les circuits électroniques peuvent être très simples. La tension constante délivrée en sortie de la machine électrique 11 permet de supprimer le module 52 de conversion de tension.

Lorsque la machine électrique 11 est du type à cage d'écureuil ou à aimants permanents, le module 52 de conversion de tension est nécessaire et un capteur de position du rotor est nécessaire pour piloter la mise en phase dans le mode moteur ou générateur.

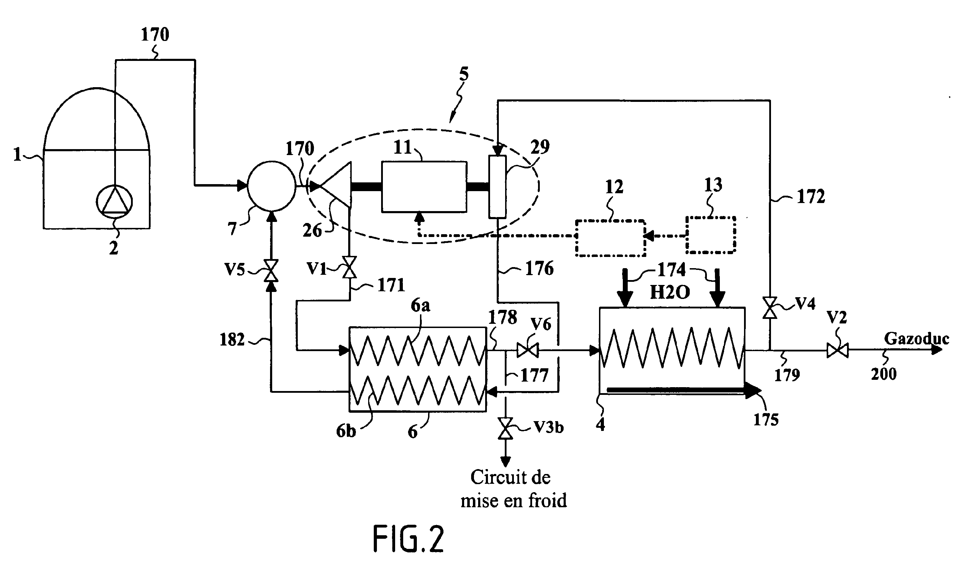

On décrira maintenant en référence aux Figures 1 à 4 l'application de la moto-turbopompe précédemment décrite à différents types de cycles de récupération d'énergie à partir d'un terminal de regazéification comprenant un réservoir 1 de gaz liquéfié dans lequel est installée une motopompe basse pression 2 qui permet l'envoi, sur une ligne 170 (Figures 1, 3 et 4), ou 170, 170 a (Figure 2) de gaz liquéfié vers l'entrée d'une pompe haute pression.

Dans le cas du cycle illustré sur la Figure 1, la seule motopompe haute pression utilisée est constituée par la pompe haute pression 26 de la moto-turbopompe 5 telle que décrite plus haut. Dans ce cas, la pompe 26 est conçue pour délivrer une pression supérieure au besoin nécessaire à l'alimentation du gazoduc 200. Le gaz issu du réservoir 1 peut ainsi, après vaporisation et réchauffage à la température ambiante, dans un premier échangeur-évaporateur 4, être détendu dans la turbine 29 jusqu'à la pression d'entrée dans le gazoduc 200, produisant ainsi de l'énergie mécanique qui vient réduire l'énergie que doit fournir le moteur électrique 11 pour entraîner la pompe 26, la variation d'enthalpie par unité de pression étant à l'état gazeux supérieure à celle de l'état liquide.

Le gaz en sortie de la turbine 29 se trouvant à une température inférieure à l'ambiante, il doit subir un complément de réchauffage en traversant un deuxième échangeur thermique 4' fonctionnant avec de l'eau à température ambiante (eau de mer ou de rivière), introduite par un circuit 174' et évacuée par un circuit 175'.

Il est possible d'introduire dans le circuit 174 d'introduction d'eau du premier échangeur-évaporateur 4 de l'eau réchauffée, par exemple à une température de l'ordre de 40 à 50°C, obtenue en récupérant les pertes thermiques d'un moteur ou d'une turbine produisant de l'électricité à proximité ou une autre source de co-génération, de façon à augmenter la température à l'entrée de la turbine 29, l'eau réchauffée étant évacuée normalement de l'échangeur-évaporateur 4 par le circuit 175 d'évacuation d'eau. Dans ce cas d'utilisation d'eau réchauffée, le deuxième échangeur thermique 4' situé en aval de la turbine 29 peut être supprimé, et l'énergie produite par la turbine 29 est fortement augmentée. Une telle configuration permet d'équilibrer toute l'énergie de pompage par l'énergie fournie par la turbine 29 et même de disposer d'un bilan positif permettant de faire fonctionner l'alternateur 11 en génératrice.

Sur la Figure 1, on voit une vanne de régulation V1 située sur la ligne 171 de refoulement de la pompe haute pression 26 conduisant à l'entrée de l'échangeur-évaporateur 4. La sortie de cet échangeur-évaporateur 4 est reliée par une ligne 172 à l'entrée de la turbine 29. La sortie de la turbine 29 est reliée par une ligne 176 à l'entrée du deuxième échangeur-évaporateur 4'. La sortie de ce dernier est reliée à une ligne 177 conduisant au gazoduc 200 et sur laquelle est située une vanne V2 d'isolement entre le gazoduc et le système de compression-évaporation constituant un régulateur de pression.

Une vanne V3 est située sur une ligne 173 de mise en froid disposée en dérivation à la sortie de la pompe haute pression 26 et conduisant en retour au réservoir 1.

Dans le cas du mode de réalisation illustré sur la Figure 1, la moto-turbopompe 5 est associée systématiquement à un premier échangeur-évaporateur 4 situé en amont de la turbine 29 et en aval de la pompe 26, et le cas échéant également à un deuxième échangeur-évaporateur 4' situé en aval de la turbine 29.

Le mode de réalisation de la Figure 1 permet d'éviter la mise en place d'un système complexe de répartition de débit vers chaque turbine 29 d'une moto-turbopompe 5. Il n'est pas nécessaire de prévoir des équipements supplémentaires de mise en froid ou de recyclage pour la pompe haute pression 26 autres que ceux existants. Au contraire, la présence des circuits 12 de régulation électronique de puissance permet de réguler la vitesse de la moto-turbopompe 5, de sorte que le cas échéant la vanne de régulation V1 située au refoulement de la pompe haute pression 26 sur la ligne 171 pourrait être supprimée.

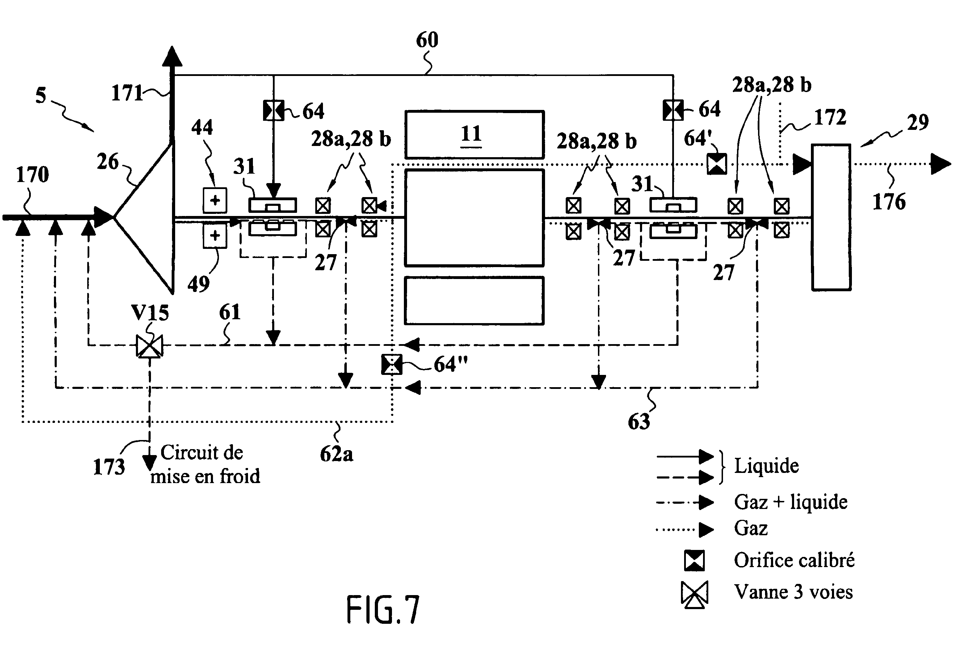

La Figure 7 montre l'agencement des différents composants et le cheminement des écoulements à l'intérieur d'une moto-turbopompe 5 mis en oeuvre dans le cadre de l'application illustrée sur la Figure 1.

On voit sur cette Figure 7 des joints d'étanchéité dynamique comprenant une double barrière 28a, 28b et définissant des cavités 27 inter joints dynamiques donnant lieu à une récupération des fuites collectées au niveau des joint d'étanchéité dynamique par une ligne 63 qui réintroduit à l'entrée de la pompe HP 26 le fluide récupéré dans les cavités 27.

Sur la Figure 7, la référence 60 désigne une ligne d'alimentation des paliers fluides 31 à partir de gaz naturel à l'état liquide prélevé à la sortie de la dernière roue centrifuge de la pompe 26 ou le cas échéant directement prélevé sur une ligne liquide haute pression du terminal où se trouve le réservoir 1. Le débit d'alimentation des paliers fluides 31 est déterminé par des orifices calibrés 64. Le gaz naturel liquide est collecté à basse pression à la sortie des paliers fluides 31 et réincorporé à l'entrée de la pompe 26 par une ligne 61.

Le débit de refroidissement de la machine électrique 11 est prélevé à l'entrée de la turbine 29, détendu à travers un orifice calibré 64' et subit une détente complémentaire à travers un deuxième orifice calibré 64" situé à la sortie de la machine électrique 11 avant d'être réincorporé par la ligne 62a à l'entrée de la pompe 26.

On voit encore sur la Figure 7 une vanne trois voies V15 située sur le circuit 173 de mise en froid des paliers fluides 31.

L'alimentation des paliers fluides 31 et du refroidissement de la machine électrique 11 peuvent se faire à partir de conduits de circulation percés dans les carters de la moto-turbopompe ou par des tuyauteries externes.

Lorsqu'il est mis en oeuvre un dispositif 49 hydraulique d'équilibrage des efforts axiaux exercés sur l'ensemble tournant de la moto-turbopompe 5, ce dispositif est équipé de dispositifs faisant office de calibrage pour le débit circulant au dos du plateau d'équilibrage et permettant d'adapter le champ de pression pour annuler la résultante des efforts.

La Figure 2 montre un autre exemple de cycle de récupération d'énergie dans lequel, comme dans le cycle de la Figure 1, une motopompe haute pression classique 303 d'un terminal (comme celui de la Figure 10) est remplacée par une moto-turbopompe 5. Dans le cas du mode de réalisation de la Figure 2, la pression de sortie de la pompe haute pression 26 de la moto-turbopompe 5 n'est toutefois pas augmentée. Une fraction du débit de fluide traversant la pompe 26 est prélevée à la sortie de l'échangeur-évaporateur 4 et dérivée, par une ligne 172 équipée d'une vanne d'isolement V4, vers la turbine 29 pour être détendue à basse pression dans cette turbine 29 avant d'être évacuée par une ligne 176 pour traverser un autre échangeur thermique 6 jouant le rôle de condenseur. Le fluide reliquéfié issu du circuit 6b de l'échangeur-condenseur 6 est réinjecté sous forme liquide, par une ligne 182 équipée d'une vanne d'isolement V5, dans une capacité 7 destinée à éliminer les bulles pouvant subsister dans le condensat, et située à l'entrée de la pompe haute pression 26.

Le flux principal de gaz liquéfié prélevé par la pompe HP 26 sur la ligne 170a de liaison à la capacité 7 circule à la sortie de cette pompe dans une ligne 171 équipée d'une vanne de régulation V1 et traverse un circuit 6a du condenseur 6. Le flux de sortie du circuit 6a du condenseur 6 est appliqué par une ligne 178 équipée d'une vanne d'isolement V6 à l'entrée de l'échangeur thermique 4 à eau à température ambiante (introduite par le circuit 174 et évacuée par le circuit 175). Le flux de liquide circulant dans le circuit 6a du condenseur 6 joue le rôle de source froide et fournit au circuit 6b les frigories nécessaires à la condensation du fluide circulant dans la ligne 176 en sortie de la turbine 29.

Comme dans le cas du mode de réalisation de la Figure 1, il est possible de coupler le circuit 174 de l'échangeur thermique 4 destiné au réchauffage à température ambiante, à une source d'eau chaude de type co-génération pour augmenter la température à l'entrée de la turbine 29 et ainsi accroître l'énergie récupérée dans la turbine.

En sortie du circuit 6a du condenseur 6, une ligne 177 équipée d'une vanne de mise en froid V3b alimente un circuit de mise en froid.

La sortie de l'échangeur-évaporateur 4 est reliée par une ligne 179 équipée d'une vanne d'isolement V2 à un gazoduc 200.

Les vannes V4, V5 assurent l'isolement du circuit turbine 29-condenseur 6. La vanne V4 située sur la ligne 172 permet en outre de réguler le débit de fluide dérivé vers la turbine 29.

On notera que le réincorporateur du terminal, non représenté sur les schémas, destiné à réintroduire la petite quantité de gaz naturel évaporée dite "boil-off gas" recomprimée dans la ligne d'alimentation d'une pompe HP peut également remplacer la capacité tampon 7.

Pour assurer des conditions de démarrage satisfaisantes pour la pompe HP 26, le côté fluide froid du condenseur 6 doit être préalablement refroidi à la température du gaz naturel liquide. La mise en froid de la partie pompe HP 26 est complétée par une circulation de liquide établie grâce à l'ouverture de la vanne V3b, la vanne V6 étant alors fermée pour isoler l'évaporateur 4 (cf. Figure 2). Le démarrage de la moto-turbopompe 5 est assuré par l'alternateur 11 fonctionnant en mode moteur et piloté par le circuit électronique 12, ce qui permet d'assurer une montée en pression progressive. Les vannes V4 et V5 sont progressivement ouvertes pour entraîner la turbine 29. La régulation du débit dérivé vers la turbine 29 est assurée par la vanne V4 qui fait également office de vanne de régulation. Lors d'un arrêt, la vanne V4 peut être fermée pour stopper l'alimentation de la turbine 29 et le moteur 11 peut ensuite être arrêté.

La présence de circuits électroniques de commande et régulation 12 de la moto-turbopompe 5 permet d'envisager la suppression de la vanne de régulation V1 située sur le refoulement de la pompe HP 26.

L'ensemble moto-turbopompe 5/condenseur 6 peut être avantageusement regroupé sur une même plate-forme de façon à minimiser les lignes de transfert liquides et simplifier l'isolation des zones froides (isolants thermiques ou boîtes froides).

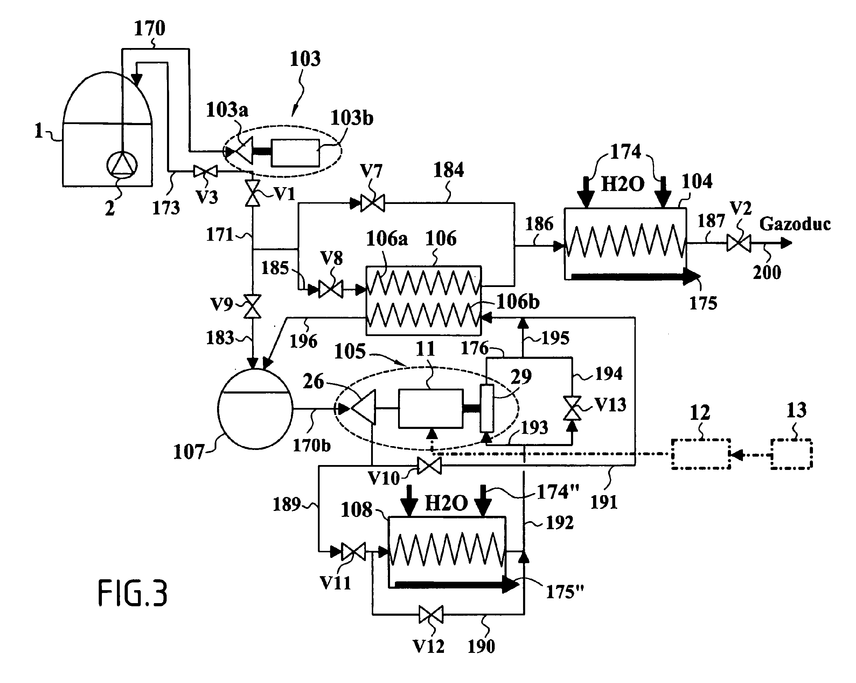

La Figure 3 illustre un autre exemple de cycle mettant en oeuvre une moto-turbopompe 105 conformément à l'invention.

Dans ce mode de réalisation de la Figure 3, il est utilisé une motopompe haute pression classique 103, analogue à la motopompe 303 de la Figure 10, avec une pompe haute pression 103a entraînée par un moteur 103b pouvant être un moteur électrique classique.

Dans le mode de réalisation de la Figure 3, qui intègre une motopompe 103 d'un terminal existant, il est introduit sur la ligne haute pression 184, 186 reliant la ligne de sortie 171 de la pompe haute pression 103a à un échangeur-évaporateur 104 classique dont la sortie est reliée à un gazoduc 200 par une ligne 187 équipée d'une vanne d'isolement V2, une vanne de régulation V7 à faible perte de charge. L'échangeur-évaporateur 104 comprend de façon classique un circuit d'entrée d'eau 174 et un circuit de sortie d'eau 175.

En dérivation sur la ligne 184 équipée de la vanne de régulation V7 à faible perte de charge, une ligne 185 équipée également d'une vanne de régulation V8 est reliée à un circuit 106a d'un condenseur 106, la sortie du circuit 106a étant reliée à la ligne 186 d'entrée de l'échangeur-évaporateur 104.

Les vannes V7 et V8 ont pour fonction d'assurer la régulation du débit de gaz liquéfié dérivé vers le circuit 106a du condenseur 106.

La vanne V8 permet également d'isoler le condenseur 106 du circuit d'émission du terminal et est utilisée pour la mise en route de la boucle de récupération d'énergie. Si le terminal n'accepte pas de perte de charge supplémentaire sur la ligne d'émission 171, il est possible de remplacer la vanne V7 par une pompe de circulation implantée sur la ligne de dérivation 185 vers le condenseur 106, la régulation du débit dérivé étant assurée dans ce cas par le pilotage de la vanne V8 et/ou de la pompe de dérivation.

Dans le mode de réalisation de la Figure 3, la boucle de récupération d'énergie comprend une moto-turbopompe 105 du type décrit plus haut, un échangeur-évaporateur 108 utilisant de l'eau à température ambiante ou réchauffée, le circuit 106b ou compartiment "chaud" du condenseur 106 ainsi qu'une capacité tampon 107 située en amont de la pompe 26, les tuyauteries de transfert de fluide et les diverses vannes destinées à assurer le bon fonctionnement de la boucle. La boucle de récupération fonctionne en cycle fermé.

Le fluide introduit dans la boucle de récupération d'énergie est dérivé de la ligne d'émission du terminal, en aval de la pompe haute pression 103a, par une ligne 183 équipée d'une vanne V9 qui alimente la capacité 107.

L'échangeur-évaporateur 108 possède un circuit 174" d'alimentation en eau à température ambiante ou légèrement réchauffée et fournie par une source de co-génération disponible à proximité, l'eau étant évacuée par un circuit 175".

Le fluide fourni par la capacité 107 à travers la ligne 170b est admis liquide à l'entrée de la pompe 26 de la moto-turbopompe 105, est pressurisé par cette pompe 26, puis vaporisé et réchauffé dans l'échangeur thermique à eau 108 jusqu'à la température ambiante ou à une température supérieure dans le cas d'utilisation d'eau réchauffée en entrée 174" de l'échangeur-évaporateur 108. Le fluide circulant à travers les lignes 192, 193 est ensuite détendu dans la turbine 29 où il cède une énergie mécanique supérieure à l'énergie requise pour le pompage. Le fluide sortant de la turbine 29 par les lignes 176, 195 est ensuite liquéfié à basse pression dans le circuit 106b du condenseur 106, puis recyclé par une ligne 196 dans la capacité 107 placée à l'entrée de la pompe 26.

L'excédent d'énergie mécanique est transformé en électricité par la machine électrique 11 qui fonctionne alors en mode génératrice et peut être fourni au terminal ou au réseau électrique local.

Dans le mode de réalisation de la Figure 3, la mise en oeuvre de la boucle de récupération d'énergie comprenant essentiellement la moto-turbopompe 105, l'échangeur-évaporateur 108 et le condenseur 106 peut être la suivante :
Le terminal dans lequel se situe le réservoir 1 fonctionne conventionnellement sans récupération d'énergie lorsque la vanne V7 est ouverte et la vanne V8 fermée. Pour mettre en oeuvre la boucle de récupération d'énergie, la première étape consiste à activer les vannes V7, V8 de façon à établir un débit de gaz naturel liquide dans le compartiment froid 106a du condenseur 106, la vanne V8 étant ouverte lentement de façon à assurer un refroidissement progressif du condenseur 106.

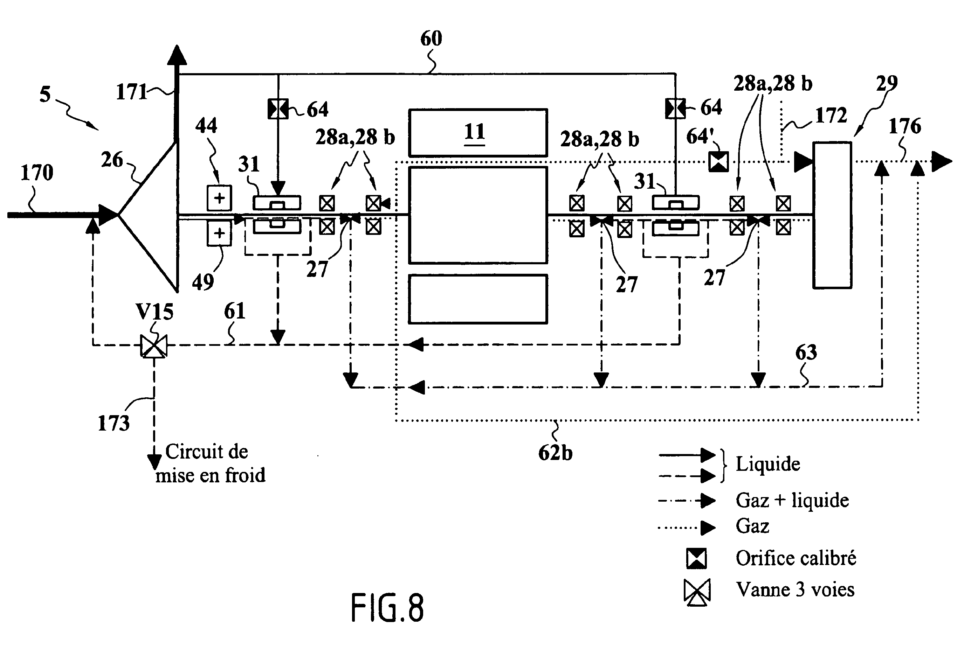

L'étape suivante consiste à remplir la boucle de récupération d'énergie en ouvrant pour du gaz naturel la vanne V9, la vanne V11 située sur la ligne 189 à l'entrée de l'échangeur 108 étant fermée et la vanne V10 située sur la ligne 191 étant ouverte. Les évaporations résultantes au refroidissement sont évacuées vers le circuit de collectage de mise en froid du terminal, la vanne V9 étant refermée si la pression dans la capacité devient trop importante. Lorsqu'il y a suffisamment de liquide dans la capacité 107, la moto-turbopompe 105 peut être activée en moteur/pompage à très faible vitesse de façon à établir une circulation de liquide dans la pompe. Pendant cette période, les fuites des paliers fluides 31 sont collectées et évacuées à travers une vanne trois voies V15 (cf. Figure 8) vers un circuit de collectage basse pression de façon à assurer une circulation fluide dans les paliers et obtenir ainsi leur refroidissement. A la fin de cette séquence, les parties pompe et paliers de la moto-turbopompe 105, ainsi que le compartiment chaud 106b du condenseur 106 sont à la température du gaz liquide, et la capacité tampon 107 est emplie d'une quantité suffisante de liquide pour assurer le bon fonctionnement de la boucle. La vanne V9 est alors refermée, ainsi que la vanne V15 d'évacuation des fuites de paliers vers le terminal, et la boucle se retrouve isolée de l'émission.

La troisième étape consiste à démarrer la moto-turbopompe 105 en mode moteur grâce aux circuits électroniques 12, la vanne V11 étant ouverte et la vanne V10 fermée pour alimenter la turbine 29 qui prend progressivement le relais du moteur, puis fournit de l'énergie excédentaire aux besoins de la pompe 26 et permet de passer en mode génératrice.

La boucle de récupération d'énergie possède sur une ligne 190 une vanne V12 de by-pass de l'échangeur-évaporateur 108 qui permet d'ajuster la température à l'entrée de la turbine 29 et par contrecoup la température à la sortie du condenseur 106, ainsi qu'une vanne V13 de by-pass de la turbine 29 qui, en dérivant sur une ligne 194 tout ou partie du débit, peut assurer l'arrêt d'urgence de la moto-turbopompe 105 en cas de panne de la génératrice ou de son électronique, et si besoin la régulation en vitesse de la moto-turbopompe 105. Avantageusement, les circuits électroniques de puissance peuvent également assurer la régulation en vitesse de la moto-turbopompe 105, sans préjudice pour la performance car dans ce cas tout le débit pompé traverse la turbine 29.

L'arrêt de la boucle s'effectue en fermant la vanne V11 et en ouvrant la vanne V10, la turbine 29 de la moto-turbopompe 105 n'étant plus alimentée que par le volume gazeux contenu dans l'échangeur-évaporateur 108 et la ligne amont s'arrête progressivement. Si un arrêt d'urgence est nécessaire, il est activé par l'ouverture de la vanne V13.

La partie 26 de la moto-turbopompe 105, ainsi que la capacité tampon 107, le condenseur 106 et les lignes liquides sont conditionnés en boîte froide ou isolés pour éviter les pertes thermiques et permettre à la boucle de récupération d'avoir des phases d'attente remplie en fluide, mais sans fonctionnement. Avantageusement, la capacité 107, la moto-turbopompe 105, le condenseur 106 ainsi que les équipements de vannage peuvent être intégrés sur une plate forme commune.

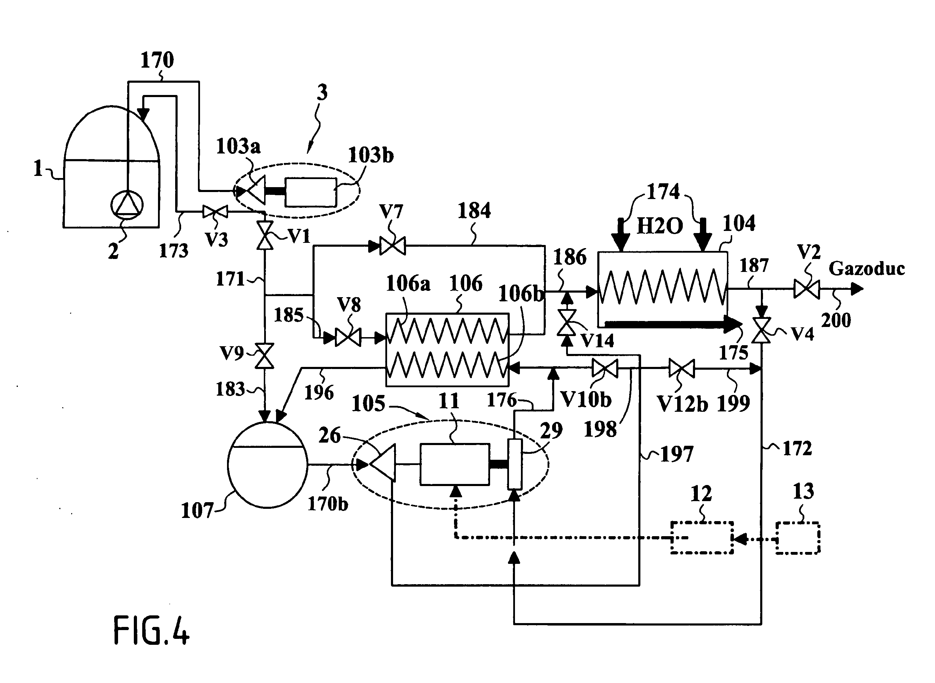

La Figure 4 illustre encore un autre exemple de cycle mettant en oeuvre une moto-turbopompe 105 conformément à l'invention.

La solution présentée sur la Figure 4 utilise le même principe que celle décrite en référence à la Figure 5, tout en évitant l'utilisation d'un échangeur thermique à eau supplémentaire, tel que l'échangeur 108 de la Figure 3.

Comme selon le mode de réalisation précédent, une partie du gaz liquéfié émis par le terminal à partir d'un réservoir 1 est prélevée en sortie d'une pompe haute pression traditionnelle 103a et en amont d'un évaporateur classique 104 pour être dérivée vers un condenseur 106 pour assurer le rôle de source froide d'un cycle de récupération d'énergie ouvert, utilisant le même gaz naturel que celui du terminal.

Dans le mode de réalisation de la Figure 4, une fraction du gaz naturel est prélevée en sortie de l'échangeur-évaporateur 104 classique d'un terminal pour être détendue dans la turbine 29 de la moto-turbopompe 105 où le gaz détendu traverse ensuite le circuit 106b du condenseur 106 pour être liquéfié puis, après avoir été réintroduit dans la capacité 107, pour circuler dans la ligne 170b, être pressurisé sous forme liquide par la pompe 26 de la moto-turbopompe 105 et ensuite être réinjecté par la ligne 200 et la vanne d'isolement V14, soit dans le flux principal du terminal à l'entrée de l'échangeur-évaporateur 104, soit éventuellement dans le flux dérivé de la pompe 103a alimentant en tant que source froide le circuit 106a du condenseur 106. Dans ce dernier cas, la pompe 26 de la moto-turbopompe 105 doit fournir la même surpression que les pompes haute pression 103a du terminal.

Comme on vient de le voir, la solution présentée sur la Figure 4 diffère de celle de la Figure 3 par l'utilisation des échangeurs-évaporateurs 104 du terminal pour la boucle de récupération d'énergie. Elle peut être aisément appliquée à un terminal existant en créant en plus des modifications précédentes sur la ligne haute pression (dérivation, vannes V7, V8) deux interfaces supplémentaires, la première en amont des échangeurs-évaporateurs 104 pour réintroduire le gaz naturel liquide venant de la moto-turbopompe 105, et la seconde en aval des mêmes évaporateurs 104 pour alimenter la turbine 29 de la moto-turbopompe 105. La boucle de récupération comprend alors le condenseur 106, la moto-turbopompe 105 et la capacité amont 107 ainsi que les tuyauteries et vannes définies sur la Figure 4, justifiées par la mise en oeuvre définie ci-dessous.

Lors de la mise en oeuvre du mode de réalisation de la Figure 4, comme pour celui de la Figure 3, la première étape consiste à activer les vannes V7, V8 pour assurer l'alimentation du circuit 106a du condenseur 106 en fluide froid.

Le remplissage du circuit capacité tampon 107, moto-turbopompe 105, partie pompe 103a, circuit 106b du condenseur 106 (côté chaud) est effectué en ouvrant la vanne V9, les vannes V4, V14 étant fermées et la vanne V10b sur la ligne 198 étant ouverte. Comme précédemment, la mise en route de l'alternateur 11 à très basse vitesse en mode moteur permet d'utiliser la pompe 26 comme circulateur de fluide et d'assurer ainsi la mise en froid de la partie "liquide" de la boucle. Pendant cette phase, les fuites des paliers fluides 31 sont comme précédemment évacuées à travers la vanne V15 vers un circuit de collectage basse pression du terminal.

Lorsque les circuits sont suffisamment refroidis et que la capacité tampon 107 présente une quantité de liquide suffisante pour assurer le bon fonctionnement de la pompe 26, les vannes V10b et V9 sont fermées, la vanne V4 sur l'entrée de la turbine 29 est ouverte progressivement, et la machine électrique 11 est activée en mode moteur simultanément pour lancer la pompe 26. La machine électrique 11 passe en mode génératrice dès que la puissance fournie par la turbine 29 le permet, et la vanne V14 est ouverte quand la pression à la sortie de la pompe 26 atteint la pression existant à l'entrée des évaporateurs 104 du terminal.

Pendant le fonctionnement de la boucle, la température à l'entrée de la turbine 29 peut être ajustée en jouant sur l'ouverture de la vanne V12b placée sur une ligne 199. La vitesse de rotation de la moto-turbopompe 105 est régulée par les circuits électroniques de commande.

L'arrêt de la boucle de récupération est obtenu en fermant la vanne V4 d'alimentation de la turbine 29 ainsi que la vanne V14 pour éviter la circulation inverse de liquide haute pression dans la pompe 26 à travers la ligne 197. Contrairement à la solution précédente, il n'y a pas de gros volume gazeux piégé en amont de la turbine 29 dès que la vanne V4 est fermée et il n'est pas nécessaire de by-passer la turbine 29 lors d'un arrêt d'urgence.

La capacité tampon 107 est équipée de systèmes de vannage permettant de vidanger la boucle et d'évacuer le surplus gazeux vers les circuits de collectage du terminal.

La solution de la Figure 4 se prête bien à une configuration condenseur 106/ moto-turbopompe 105/capacité 107 et équipements liquides intégrés sur une même plate-forme.

Si l'on se reporte à la Figure 8, on voit le schéma de l'agencement des différents composants de la moto-turbopompe 5 ou 105 et le cheminement des écoulements à l'intérieur de celle-ci dans le cas des applications qui viennent d'être décrites en référence aux Figures 2 à 4.

On peut noter que selon la Figure 8, à la différence du schéma de la Figure 7 applicable au mode de réalisation de la Figure 1, l'évacuation par la ligne 63 des fuites collectées au niveau des joints d'étanchéité dynamique 28a, 28b et du refroidissement de l'alternateur par la ligne 62b, se fait en aval de la turbine 29 et non pas vers l'entrée de la pompe 26.

Les autres éléments communs aux schémas des Figures 7 et 8 ne seront pas décrits à nouveau.

On notera que dans les différents modes de réalisation décrits, les échangeurs-évaporateurs peuvent être par exemple des échangeurs à ruissellement d'eau, ou encore du type tube/calandre ou encore à serpentin dans une cuve d'eau réchauffée.

Le condenseur 106 est typiquement un échangeur à plaques ou à tubes/calandre.

Le système selon l'invention a été décrit ci-dessus dans divers exemples en référence avec une moto-turbopompe 5 ou 105 associée à un condenseur 106 et/ou un échangeur-évaporateur 4 ou 108 et

coopérant le cas échéant également avec un échangeur-évaporateur traditionnel 104 et/ou une motopompe classique 103a.

Toutefois, l'invention s'applique à des systèmes comportant un plus grand nombre de composants.

Traditionnellement, les terminaux de regazéification sont aménagés sur la base d'un regroupement des différentes fonctions avec des batteries de motopompe HP reliées par une ou deux lignes haute pression à des batteries d'échangeurs-évaporateurs. Le nombre d'équipements pompes et évaporateurs mis en oeuvre est fonction du débit d'émission demandé au terminal, et les vannes de régulation situées sur le refoulement des pompes HP, ainsi que celles qui sont implantées en aval des évaporateurs assurent l'ajustement du débit et de la pression à l'entrée du gazoduc.

La mise en route d'une motopompe HP impose une séquence particulière. Tout d'abord, la motopompe doit être refroidie à la température du gaz liquide par circulation de gaz naturel liquide sous basse pression, récupéré ensuite dans un circuit de collectage spécifique, pour éviter la présence de bulles gazeuses dans le liquide et la cavitation de la pompe en fonctionnement. C'est cette séquence de mise en froid qui fait appel à une vanne de purge 3V3 (cf. Figure 10). Pendant le démarrage ensuite, et pour éviter une montée en pression trop brutale du fluide pompé et la présence de coup de bélier, une partie du débit est dérivée au refoulement de la pompe et recyclée vers un autre circuit de collectage compatible de la pression plus élevée. Dans le cadre de la présente invention, une vanne de purge 3V2b, associée à un circuit de mise en froid, est également mise en oeuvre avec une moto-turbopompe 5 ou 105 comme cela a été mentionné dans les différents exemples des Figures 1 à 4.

## Revendications

1. Système de compression-évaporation pour gaz liquéfié contenu dans un réservoir (1), comprenant des moyens (2) de prélèvement et de pompage pour extraire et refouler le gaz liquéfié sous basse pression hors du réservoir (1), des moyens de pompage à haute pression, des moyens (4, 4' ; 104) d'évaporation par échange thermique avec un fluide liquide et des moyens de conditionnement et de transfert vers un gazoduc (200),
**caractérisé en ce qu'**il comprend au moins une turbomachine constituée par une moto-turbopompe (5 ; 105) comprenant un ensemble tournant à grande rigidité en flexion sur une même ligne d'arbre, avec au moins une pompe haute pression (26) comprenant un étage d'aspiration axial et au moins une roue centrifuge, une turbine (29) et une machine électrique centrale (11) pouvant être utilisée en mode moteur ou génératrice et située entre la pompe haute pression (26) et la turbine (29), cette moto-turbopompe (5 ; 105) étant agencée de manière compacte à l'intérieur d'un carter rigide (25) ne présentant que des étanchéités statiques avec le milieu environnant, l'ensemble tournant de la moto-turbopompe (5 ; 105) étant adapté pour présenter une haute vitesse de rotation supérieure à 12 000 tr/min tout en restant en dehors des plages d'excitation des vitesses critiques de rotation, toutes les parties internes de la moto-turbopompe (5 ; 105) étant baignées par un même fluide cryogénique que le gaz liquéfié contenu dans le réservoir (1), la séparation de cavités internes de la moto-turbopompe (5 ; 105) se trouvant dans des conditions thermodynamiques différentes étant assurée par des joints d'étanchéité dynamiques sans contact (28), et des circuits électroniques de puissance (12) raccordés à un réseau électrique (13) assurant le pilotage de la machine électrique centrale (11) en mode moteur ou génératrice.

2. Système selon la revendication 1, **caractérisé en ce que** la vitesse de rotation de l'ensemble tournant de la moto-turbopompe est comprise entre 20 000 et 40 000 tr/min.

3. Système selon la revendication 1 ou la revendication 2, **caractérisé en ce qu'**il comprend un premier échangeur-évaporateur (4 ; 104 ; 108) intercalé entre la pompe haute pression (26) et la turbine (29) pour assurer la compression/évaporation du gaz liquéfié utilisé comme fluide de travail dans la moto-turbopompe (5 ; 105).

4. Système selon la revendication 3, **caractérisé en ce que** les moyens de pompage à haute pression comprennent exclusivement la pompe haute pression (26) de la moto-turbopompe (5) qui est montée en série entre le réservoir (1) et le gazoduc (200).

5. Système selon la revendication 3 ou la revendication 4, **caractérisé en ce que** les moyens d'évaporation par échange thermique avec un fluide liquide comprennent ledit premier échangeur-évaporateur (4) intercalé entre la pompe haute pression (26) et la turbine (29) et un second échangeur-évaporateur (4') disposé entre la turbine (29) et le gazoduc (200) à alimenter.

6. Système selon l'une quelconque des revendications 1 à 3, **caractérisé en ce qu'**il comprend en outre une capacité tampon (7 ; 107) disposée en entrée de la pompe haute pression (26) de la moto-turbopompe (5 ; 105).

7. Système selon la revendication 3 et la revendication 6, **caractérisé en ce qu'**il comprend en outre un condenseur (6) avec un premier circuit (6a) interposé entre la sortie de la pompe haute pression (26) de la moto-turbopompe (5) et le premier échangeur-évaporateur (4) et un second circuit (6b) interposé entre la sortie de la turbine (29) de la moto-turbopompe (5) et la capacité tampon (7), le second circuit (6b) étant en échange de chaleur avec le premier circuit (6a) pour reliquéfier le fluide gazeux sortant de ladite turbine (29).

8. Système selon la revendication 6, **caractérisé en ce que** les moyens de pompage à haute pression comprennent une motopompe (103a, 103b) dont l'entrée est reliée auxdits moyens (2) de prélèvement et de pompage, et dont la sortie est reliée à un premier circuit (106a) d'un condenseur (106), la sortie de ce premier circuit (106a) étant reliée à l'entrée d'un échangeur-évaporateur (104) dont la sortie est reliée audit gazoduc (200), **en ce que** ladite capacité tampon (107) est montée en dérivation à la sortie de ladite motopompe (103a, 103b), et **en ce que** la sortie de la turbine (29) de la moto-turbopompe (105) est reliée à l'entrée d'un second circuit (106b) du condenseur (106), la sortie de ce second circuit (106b) étant reliée à ladite capacité tampon (107), le second circuit (106b) étant en échange de chaleur avec le premier circuit (106a) pour reliquéfier le fluide gazeux sortant de ladite turbine (29).

9. Système selon la revendication 1, **caractérisé en ce que** les moyens (4, 4', 104) d'évaporation par échange thermique avec un fluide liquide comprennent des moyens d'introduction et d'évacuation d'un fluide liquide constitué par de l'eau dont la température est au moins égale à la température ambiante.

10. Système selon la revendication 3, **caractérisé en ce que** le premier échangeur-évaporateur (4 ; 104 ; 108) intercalé entre la pompe haute pression (26) et la turbine (29) comprend des moyens d'introduction et d'évacuation d'un fluide liquide constitué par de l'eau dont la température est au moins égale à la température ambiante.

11. Système selon l'une quelconque des revendications 1 à 10, **caractérisé en ce que** la moto-turbopompe (5 ; 105) comprend des paliers fluides hydrostatiques (31) alimentés à partir du même fluide à l'état liquide et comprimé que le fluide disponible en sortie de la pompe haute pression (26) de la moto-turbopompe (5 ; 105).

12. Système selon la revendication 11, **caractérisé en ce que** la moto-turbopompe (5 ; 105) comprend un dispositif hydraulique d'équilibrage actif des efforts axiaux alimenté à partir du même fluide à l'état liquide et comprimé que le fluide disponible en sortie de la pompe haute pression (26) de la moto-turbopompe (5 ; 105).

13. Système selon la revendication 11, **caractérisé en ce que** la moto-turbopompe (5 ; 105) comprend une butée fluide axiale alimentée à partir du même fluide à l'état liquide et comprimé que le fluide disponible en sortie de la pompe haute pression (26) de la moto-turbopompe (5 ; 105).

14. Système selon l'une quelconque des revendications 1 à 10, **caractérisé en ce que** la moto-turbopompe (5 ; 105) comprend des paliers magnétiques actifs.

15. Système selon la revendication 14, **caractérisé en ce que** la moto-turbopompe (5 ; 105) comprend une butée axiale magnétique.

16. Système selon l'une quelconque des revendications 1 à 10, **caractérisé en ce que** la moto-turbopompe (5 ; 105) comprend des roulements haute vitesse à billes céramiques.

17. Système selon l'une quelconque des revendications 1 à 16, **caractérisé en ce que** la turbine (29) de la moto-turbopompe (5 ; 105) comprend un rotor (48) en alliage de titane à haute résistance de type TA6 V ELI ou TA5 E ELI ou en alliage léger du type aluminium-lithium.

18. Système selon l'une quelconque des revendications 1 à 17, **caractérisé en ce que** la pompe haute pression (26) de la moto-turbopompe (5 ; 105) comprend un ou plusieurs rouets (41, 46) en alliage de titane à haute résistance du type TA6 V ELI ou TA5 E ELI ou en alliage léger de type aluminium-lithium.

19. Système selon l'une quelconque des revendications 1 à 18, **caractérisé en ce que** la machine électrique centrale (11) de la moto-turbopompe (5 ; 105) comprend un rotor à aimants permanents (21b) ,les circuits électroniques de puissance (12) assurant l'alimentation à fréquence synchrone de la vitesse de rotation et tension variable en mode moteur et convertissant la tension variable créée en tension fixe redressée en mode générateur.

20. Système selon l'une quelconque des revendications 1 à 18, **caractérisé en ce que** la machine électrique centrale (11) de la moto-turbopompe (5 ; 105) comprend un rotor monobloc à bobine d'excitation (21a) alimentée par un transformateur tournant (37) et un pont de diodes de redressement (30) pour réguler l'excitation de la machine électrique (11) et fournir une tension constante en mode générateur et un couple contrôlé en mode moteur.

21. Système selon l'une quelconque des revendications 1 à 18, **caractérisé en ce que** la machine électrique centrale (11) de la moto-turbopompe (5 ; 105) comprend un rotor à cage d'écureuil, les circuits électroniques de puissance (12) assurant l'alimentation à fréquence et tension variable en mode moteur et convertissant la tension variable créée en tension fixe redressée en mode générateur.

22. Système selon l'une quelconque des revendications 1 à 21, **caractérisé en ce qu'**il est appliqué à un gaz liquéfié du type gaz naturel liquéfié (GNL).

## Claims

1. A compressor-evaporator system for liquefied gas container in a tank (1), the system comprising extraction and pump means (2) for extracting and delivering liquefied gas under low pressure outside the tank (1), high pressure pump means, evaporator means (4, 4'; 104) operating by heat exchange with a liquid, and means for conditioning and transferring gas to a gas pipeline (200),
the system being **characterized in that** it comprises at least one turbomachine constituted by a motor-driven turbopump (5; 105) comprising a rotary assemble having very high bending stiffness on a common shaft line, with at least one high pressure pump (26) comprising an axial suction stage and at least one centrifugal wheel, a turbine (29), and a central electrical machine (11) capable of being used in motor mode or in generator mode and situated between the high pressure pump (26) and the turbine (29), said motor-driven turbopump (5; 105) being arranged in compact manner inside a rigid casing (25) that presents static seals only with the surrounding medium, the rotary assembly of the motor-driven turbopump (5; 105) being adapted to present a high speed of rotation, greater than 12,000 rpm, while remaining outside the excitation ranges of critical speeds of rotation, all of the internal portion of the motor-driven turbopump (5; 105) being immersed in a cryogenic fluid that is the same as the liquefied gas contained in the tank (1), the internal cavities of the motor-driven turbopump (5; 105) that are under different thermodynamic conditions being separated by contactless dynamic seals (28), and electronic power circuits (12) connected to an electricity network (13) serving to control the central electrical machine (11) in motor mode or generator mode.

2. A system according to claim 1, **characterized in that** the speed of rotation of the rotary assembly of the motor-driven turbopump lies in the range 20,000 rpm to 40,000 rpm.

3. A system according to claim 1 or claim 2, **characterized in that** it includes a first heat exchanger and evaporator (4 ; 104; 108) interposed between the high pressure pump (26) and the turbine (29) to compress and to evaporate the liquefied gas used as the working fluid in the motor-driven turbopump (5; 105).

4. A system according to claim 3, **characterized in that** the high pressure pump means comprise exclusively the high pressure pump (26) of the motor-driven turbopump (5) connected in series between the thank (1) and the pipeline (200).

5. A system according to claim 3 or claim 4, **characterized in that** the means for evaporation by heat exchange with a liquid comprise said first heat exchanger and evaporator (4) interposed between the high pressure pump (26) and the turbine (29), and a second heat exchanger and evaporator (4') disposed between the turbine (29) and the pipeline (200) to be fed.

6. A system according to anyone of claims 1 to 3, **characterized in that** it further comprises a buffer volume (7; 107) disposed at the inlet to the high pressure pump of the motor- driven turbopump (5; 105 .

7. A system according to claim 3 and to claim 6, **characterized in that** it further comprise a condenser (6) with a first circuit (6a) interposed between the outlet of the high pressure pump (26) of the motor driven turbopump (5) and the first heat exchanger and evaporator (4), and a second circuit (6b) interposed between the outset of the turbine (29) of the motor-driven turbopump (5) and the buffer volume (7), the second circuit (6b) being in heat exchange with the first circuit (6a) to reliquefy the gas cleaving said turbine (29).

8. A system according to claim 6, **characterized in that** the high pressure pump means comprise a motor-driven pump (103a, 103b) having its inlet connected to said extraction and pump means (2), and having its outlet connected two a first circuit (106a) of a condenser, the outlet from said first circuit (106a) being connected to the inset of a heat exchanger and evaporator (104) whose outlet is connected to said pipeline (200), **in that** said buffer volume (107) is in a branch connection connected to the outlet of said motor-driven pump (103a, 103b), and and **in that** the outlet from the turbine (29) of the motor-driven turbopump (105) is connected to the inlet of a second circuit (106b) of the condenser (106), the outlet from said second circuits (106b) being connected to said buffer volume (107), the second circuit (106b) bering in heat exchange witch the first circuit to reliquefy the gas leaving said turbine (29).

9. A system according to claim 1, **characterized in that** the means (4, 4', 104) for evaporation by heat exchange witch a liquid comprise means for introducing and evacuating a liquid constituted by water at a temperature that is not less than ambient temperature.

10. A system according to claim 3, **characterized in that** the first heat exchanger and evaporator (4; 104; 108) interposed between the high pressure pump (26) and the turbine (29) includes means for introducing and evacuating a liquid constitute by water at a temperature that is not less than ambient temperature.

11. A system according to anyone of claims 1 to 10, **characterized in that** the motor-driven turbopump (5; 105) includes hydrostatic fluid bearings (31) fed with a fluid in the liquid and compressed state that is the same as the fluid available from the outlet of the high pressure (26) pump of the motor-driven turbopump (5; 105).

12. A system according to claim 11, **characterized in that** the motor-driven turbopump (5; 105) includes an active hydraulic device for balancing axial forces, which device is fed with a fluid in the liquid and compressed state that is the same as the fluid available from the outlet of the high pressure pump (26) of the motor-driven turbopump (5; 105).

13. A system according to claim 11, **characterized in that** the motor-driven turbopump (5; 105) includes an axial fluid abutment fed with a fluid in the liquid and compresses state that is the same as the fluid available from the outlet of the high pressure plump (26) of the motor-driven turbopump (5; 105).

14. A system according to anyone of claims 1 to 10, **characterized in that** the motor-driven turbopump includes active magnetic bearings.

15. A system according to claim 14, **characterized in that** the motor-driven turbopump (5; 105) includes a magnetic axial abutment ,

16. A system according to anyone of claims 1 to 10, **characterized in that** the motor-driven turbopump (5; 105) includes high speed ball bearings with ceramic balls.

17. A system according to anyone of claims 1 to 16, **characterized in that** the turbine (29) of the motor-driven turbopump (5; 105) comprises a rotor (48) of high-strength titanium alloy of the TA6 V ELI or TA5 E ELI type or of light alloy of the aluminum-lithium type.

18. A system according to anyone of claims 1 to 17, **characterized in that** the high pressure pump (26) of the motor-driven turbopump (5; 105) comprises one or more impellers (41, 46) of high-strength titanium alloy of the TA6 V ELI or TA5 E ELI type or of light alloy of the aluminum-lithium type.

19. A system according to anyone of claims 1 to 18, **characterized in that** the central electrical machine (11) of the motor-driven turbopump (5; 105) comprises a permanent magnet rotor (21b), the electronic power circuit (12) delivering power at a frequency synchronous with the speed of rotation and at variable voltage in motor mode, and conversing the variable voltage that is created in generator mode into a rectified constant voltage.

20. A system according to anyone of claims 1 to 18, **characterized in that** the central electrical machine (11) of the motor-driven turbopump (5; 105) has a one-piece rotor with an excitation coil (21a) fed by a rotary transformed (37) and a rectifier diode bridge (30) for regulating the excitation of the electrical machine (1) and for providing a constant voltage in generator mode and controller torque in motor mode.

21. A system according to anyone of claims 1 to 18, **characterized in that** the central electrical machine (11) of the motor-driven turbopump (5; 105) includes a squirrel-cage rotor, the electronic power circuits (12) delivering power at variable voltage and frequency in motor mode and converting the variable voltage that is created in generator mode into a rectified constant voltage.

22. A system according to anyone of claims 1 to 21, **characterized in that** it is applied to a liquefied gas of the liquefied natural gas type (GNL) .

## Patentansprüche

1. System zum Verdichten/Verdampfen für in einem Behälter (1) enthaltenes Flüssiggas, das folgendes umfaßt, nämlich Entnahme- und Pumpmittel (2), um das Flüssiggas unter niedrigem Druck aus dem Behälter (1) abzuziehen und zu fördern, Mittel (4; 4'; 104) zum Verdampfen durch Wärmeaustausch mit einem flüssigen Fluid sowie Mittel zum Verpacken und zum Transportieren zu einer Gasleitung (200),
**dadurch gekennzeichnet, daß** es wenigstens eine Turbomaschine umfaßt, die von einer Motor-Turbopumpe (5; 105) gebildet ist, welche eine umlaufende Einheit mit hoher Biegesteifigkeit auf einem gleichen Wellenstrang mit weinigstens einer Hochdruckpumpe (26), die eine axiale Ansaugstufe und wenigstens ein Zentrifugalrad aufweist, einer Turbine (29) sowie einer mittleren Elektromaschine (11), die im Motor- oder Generator-Modus eingesetzt werden kann und zwischen der Hochdruckpumpe (26) und der Turbine (29) angeordnet ist, umfaßt, wobei diese Motor-Turbopumpe (5; 105) auf kompakte Weise innerhalb eines starren Gehäuses (25) angeordnet ist, das lediglich statische Abdichtungen mit dem Umgebungsmedium aufweist, wobei die umlaufende Einheit der Motor-Turbopumpe (5; 105) ausgelegt ist, eine hohe Drehgeschwindigkeit von über 12.000 U/Min. aufzuweisen und dabei außerhalb der Erregungsbereiche der kritischen Drehgeschwindigkeiten zu bleiben, wobei alle inneren Teile der Motor-Turbopumpe (5; 105) in eine gleiche Kryoflüssigkeit wie das in dem Behälter (1) enthaltene Flüssiggas eingetaucht sind, wobei die Trennung von Innenhohlräumen der Motor-Turbopumpe (5; 105), die sich unter unterschiedlichen thermodynamischen Bedingungen befinden, durch berührungslose dynamische Dichtungen (28) sichergestellt ist, und wobei mit einem Stromnetz (13) verbundene elektronische Leistungskreise (12) die Steuerung der mittlere Elektromaschine (11) im Motor- oder Generator-Modus sicherstellen.

2. System nach Anspruch 1, **dadurch gekennzeichnet, daß** die Drehgeschwindigkeit der umlaufenden Einheit der Niotor-Turbopumpe zwischen 20.000 und 40.000 U/Min. liegt.

3. System nach Anspruch 1 oder Anspruch 2, **dadurch gekennzeichnet, daß** es einen ersten Austauscher-Verdampfer (4; 104; 108) aufweist, welcher zwischen der Hochdruckpumpe (26) und der Turbine (29) angeordnet ist, um das Verdichten/Verdampfen des in der Motor-Turbopumpe (5; 105) als Arbeitsfluid verwendeten Flüssiggases sicherzustellen.

4. System nach Anspruch 3, **dadurch gekennzeichnet, daß** die Hochdruckpumpmittel ausschließlich die Hochdruckpumpe (26) der Motor-Turbopumpe (5) umfassen, die zwischen dem Behälter (1) und der Gasleitung (200) in Reihe geschaltet ist.

5. System nach Anspruch 3 oder Anspruch 4, **dadurch gekennzeichnet, daß** die Mittel zum Verdampfen durch Wärmeaustausch mit einem flüssigen Fluid den zwischen der Hochdruckpumpe (26) und der Turbine (29) angeordneten ersten Austauscher-Verdampfer (4) sowie einen zwischen der Turbine (29) und der zu speisenden Gasleitung (200) angeordnete zweiten Austauscher-Verdampfer (4') umfassen.

6. System nach einem der Ansprüche 1 bis 3, **dadurch gekennzeichnet, daß** es ferner eine Pufferkapazität (7; 107) umfaßt, die am Eingang der Hochdruckpumpe (26) der Motor-Turbopumpe (5; 1 05) angeordnet ist.

7. System nach Anspruch 3 und Anspruch 6, **dadurch gekennzeichnet, daß** es ferner einen Kondensator (6) mit einem zwischen dem Ausgang der Hochdruckpumpe (26) der Motor-Turbopumpe (5) und dem ersten Austauscher-Verdampfer (4) zwischengeschalteten ersten Kreis (6a) und einem zwischen dem Ausgang der Turbine (29) der Motor-Turbopumpe (5) und der Pufferkapazität (7) zwischengeschalteten zweiten Kreis (6b) umfaßt, wobei der zweite Kreis (6b) mit dem ersten Kreis (6a) in Wärmeaustausch steht, um das aus der Turbine (29) austretende gasförmige Fluid wieder zu verflüssigen.

8. System nach Anspruch 6, **dadurch gekennzeichnet, daß** die Hochdruckpumpmittel eine Motorpumpe (103a, 103b) umfassen, deren Eingang mit den Entnahme- und Pumpmitteln (2) verbunden ist und deren Ausgang mit einem ersten Kreis (106a) eines Kondensators (106) verbunden ist, wobei der Ausgang dieses ersten Kreises (106a) mit dem Eingang eines Austauschers-Verdampfers (104) verbunden ist, dessen Ausgang mit der Gasleitung (200) verbunden ist, daß die Pufferkapazität (107) zum Ausgang der Motorpumpe (103a, 103b) parallelgeschaltet ist, und daß der Ausgang der Turbine (29) der Motor-Turbopumpe (105) mit dem Eingang eines zweiten Kreises (106b) des Kondensators (106) verbunden ist, wobei der Ausgang dieses zweiten Kreises (106b) mit der Pufferkapazität (107) verbunden ist, wobei der zweite Kreis (106b) mit dem ersten Kreis (106a) in Wärmeaustausch steht, um das aus der Turbine (29) austretende gasförmige Fluid wieder zu verflüssigen.

9. System nach Anspruch 1, **dadurch gekennzeichnet, daß** die Mittel (4, 4', 104) zum Verdampfen durch Wärmeaustausch mit einem flüssigen Fluid Mittel zum Einleiten und Abführen eines von Wasser gebildeten flüssigen Fluids, dessen Temperatur wenigstens gleich der Umgebungstemperatur ist, umfassen.

10. System nach Anspruch 3, **dadurch gekennzeichnet, daß** der zwischen der Hochdruckpumpe (26) und der Turbine (29) eingefügte erste Austauscher-Verdampfer (4; 104; 108) Mittel zum Einleiten und Abführen eines von Wasser gebildeten flüssigen Fluids, dessen Temperatur wenigstens gleich der Umgebungstemperatur ist, umfaßt.

11. System nach einem der Ansprüche 1 bis 10, **dadurch gekennzeichnet, daß** die Motor-Turbopumpe (5; 105) hydrostatische Fluidlager (31) aufweist, die mit dem gleichen Fluid in flüssigem und verdichtetem Zustand wie dem am Ausgang der Hochdruckpumpe (26) der Motor-Turbopumpe (5; 105) verfügbaren Fluid versorgt werden.

12. System nach Anspruch 11, **dadurch gekennzeichnet, daß** die Motor-Turbopumpe (5; 105) eine hydraulische Vorrichtung zum aktiven Ausgleichen der axialen Kräfte umfaßt, die mit dem gleichen Fluid in flüssigem und verdichtetem Zustand wie dem am Ausgang der Hochdruckpumpe (26) der Motor-Turbopumpe (5; 105) verfügbaren Fluid versorgt wird.

13. System nach Anspruch 11, **dadurch gekennzeichnet, daß** die Motor-Turbopumpe (5; 105) ein Axialfluidlager umfaßt, das mit dem gleichen Fluid in flüssigem und verdichtetem Zustand wie dem am Ausgang der Hochdruckpumpe (26) der Motor-Turbopumpe (5; 105) verfügbaren Fluid versorgt wird.

14. System nach einem der Ansprüche 1 bis 10, **dadurch gekennzeichnet, daß** die Motor-Turbopumpe (5; 105) aktive Magnetlager umfaßt.

15. System nach Anspruch 14, **dadurch gekennzeichnet, daß** die Motor-Turbopumpe (5; 105) ein Axialmagnetlager umfaßt.

16. System nach einem der Ansprüche 1 bis 10, **dadurch gekennzeichnet, daß** die Motor-Turbopumpe (5; 105) Hochgeschwindigkeits-Keramikkugellager aufweist.

17. System nach einem der Ansprüche 1 bis 16, **dadurch gekennzeichnet, daß** die Turbine (29) der Motor-Turbopumpe (5; 105) einen Rotor (48) aus hochfester Titanlegierung vom Typ TA6 V ELI oder TA5 E ELI oder aus einer Leichtmetall-Legierung von der Art Aluminium-Lithium umfaßt.

18. System nach einem der Ansprüche 1 bis 17, **dadurch gekennzeichnet, daß** die Hochdruckpumpe (26) der Motor-Turbopumpe (5; 105) ein oder mehrere Räder (41, 46) aus hochfester Titanlegierung vom Typ TA6 V ELI oder TA5 E ELI oder aus einer Leichtmetall-Legierung von der Art Aluminium-Lithium umfaßt.

19. System nach einem der Ansprüche 1 bis 18, **dadurch gekennzeichnet, daß** die mittlere Elektromaschine (11) der Motor-Turbopumpe (5; 105) einen Läufer mit Permanentmagneten (21b) umfaßt, wobei die elektronischen Leistungskreise (12) die Versorgung mit synchroner Frequenz der Drehgeschwindigkeit und variabler Spannung im Motor-Modus sicherstellen und die erzeugte variable Spannung in eine gleichgerichtete Festspannung im Generator-Modus umwandeln.

20. System nach einem der Ansprüche 1 bis 18, **dadurch gekennzeichnet, daß** die mittlere Elektromaschine (11) der Motor-Turbopumpe (5; 105) einen einstückigen Läufer mit von einem Drehtransformator (37) gespeister Erregerspule (21a) sowie eine Gleichrichterdiodenbrücke (30) umfaßt, um die Erregung der Elektromaschine (11) zu regulieren und um eine konstante Spannung im Generator-Modus sowie ein kontrolliertes Drehmoment im Motor-Modus zu liefern.

21. System nach einem der Ansprüche 1 bis 18, **dadurch gekennzeichnet, daß** die mittlere Elektromaschine (11) der Motor-Turbopumpe (5; 105) eignen Käfigläufer umfaßt, wobei die elektronischen Leistungskreise (12) die Versorgung mit variable Frequenz und Spannung im Motor-Modus sicherstellen und die erzeugte variable Spannung in eine gleichgerichtete Festspannung im Generator-Modus umwandeln.

22. System nach einem der Ansprüche 1 bis 21, **dadurch gekennzeichnet, daß** es auf ein Flüssiggas von der Art Flüssigerdgas (LNG) angewandt wird.
